# EUROPÄISCHE PATENTSCHRIFT

(11) **EP 3 657 701 B1**
(45) Veröffentlichungstag und Bekanntmachung des Hinweises auf die Patenterteilung: **08.07.2026**
(21) Anmeldenummer: 19210932.0
(22) Anmeldetag: 22.11.2019
(51) Int. Cl.: H04B 17/10, H04B 1/04

(54) **VERSCHLEIERUNG VON UMWELTEINFLÜSSEN AUF DEN SENDEPARAMETERN**
SCRAMBLING OF ENVIRONMENTAL INFLUENCES ON TRANSMIT PARAMETERS
MASQUAGE DES INFLUENCES ENVIRONNEMENTALES SUR LES PARAMÈTRES D'ÉMISSION

(30) Priorität: 23.11.2018 DE 102018220204
(43) Veröffentlichungstag der Anmeldung: 27.05.2020
(73) Patentinhaber: Fraunhofer-Gesellschaft zur Förderung der angewandten Forschung e.V., 80686 München (DE); Diehl Metering GmbH, 91522 Ansbach (DE)
(72) Erfinder: Kilian, Gerd, 91058 Erlangen (DE); Bernhard, Josef, 91058 Erlangen (DE); Kauppert, Thomas, 90455 Nürnberg (DE); Petkov, Hristo, 90425 Nürnberg (DE); Wechsler, Johannes, 91058 Erlangen (DE); Kneißl, Jakob, 91058 Erlangen (DE); Mzyk, Raphael, 91126 Kammerstein (DE); Gottschalk, Klaus, 90610 Winkelhaid (DE); Soller, Dominik, 91058 Erlangen (DE); Schlicht, Michael, 91058 Erlangen (DE)
(74) Vertreter: Schlenker, Julian

(56) Entgegenhaltungen:
- DE-A1- 102011 004 752
- US-A1- 2001 053 176
- US-A1- 2004 235 438
- US-A1- 2018 262 526
- TANZAWA T ET AL: "A 2.4-GHZ TEMPERATURE-COMPENSATED CMOS LC-VCO FOR LOW FREQUENCY DRIFT LOW-POWER DIRECT-MODULATION GFSK TRANSMITTERS", IEICE TRANSACTIONS ON ELECTRONICS, INSTITUTE OF ELECTRONICS, TOKYO, JP, vol. E88-C, no. 4, 1 April 2005 (2005-04-01), pages 490 - 495, XP001228930, ISSN: 0916-8524, DOI: 10.1093/IETELE/E88-C.4.490

## Beschreibung

Ausführungsbeispiele der vorliegenden Erfindung beziehen auf einen Datensender, einen Datenempfänger sowie ein Kommunikationssystem mit einem Datensender und einem Datenempfänger, und im speziellen, auf eine Verschleierung von Umgebungsbedingungen (Umweltparametern) in einer Umgebung des Datensenders.

Herkömmlicherweise kommen in Funksystemen zur Erzeugung von Signalen Taktgeber, wie z.B. Oszillatoren, zum Einsatz. Von den Taktgebern bereitgestellte Taktsignale und somit auch die von den Taktsignalen abgeleiteten Sendesignale sind jedoch von den Umgebungsbedingungen (Umweltparameter), insbesondere einer Temperatur, in den jeweiligen Umgebungen der Datensender abhängig.

Durch Auswertung von Signalparametern der empfangenen Signale ist es somit möglich Rückschlüsse auf die Umgebungsbedingungen der jeweiligen Datensender zu schließen.

Die DE 10 2011 004752 A1 beschreibt eine Signalverarbeitungsschaltung zum Bereitstellen eines modulierten analogen Sendesignals basierend auf einem digitalen Sendedatensignal, wobei die Signalverarbeitungsschaltung ausgebildet ist, um eine Auflösung bei der Bereitstellung des modulierten analogen Sendesignals in Abhängigkeit von einem erfassten oder vorgegebenen Parameter zu variieren.

Die US 2004/235438 A1 beschreibt einen Funksender umfassend eine Leistungssteuertabelle, einen Leistungsverstärker und eine Leistungssteuerung. Die Leistungssteuertabelle enthält mehrere Steuerwerte. Der Leistungsverstärker verstärkt ein HF-Signal mit einer einstellbaren Verstärkung. Der Leistungsregler stellt die Verstärkung des Leistungsverstärkers basierend auf der Leistungssteuertabelle und einem Temperatursignal ein, das eine Temperatur von mindestens einem Teil des Funksenders anzeigt.

In [TANZAWA T ET AL: "A 2.4-GHZ TEMPERATURE-COMPENSATED CMOS LC-VCO FOR LOW FREQUENCY DRIFT LOW-POWER DIRECTMODULATION GFSK TRANSMITTERS",IEICE TRANSACTIONS ON ELECTRONICS, INSTITUTE OF ELECTRONICS, TOKYO, JP, Bd. E88-C, Nr. 4, 1. April 2005 (2005-04-01 ), Seiten 490-495, XP001228930,ISSN: 0916-8524, DOl: 10.1093/IETELE/E88-C.4.490] wird ein temperaturkompensierter, spannungsgesteuerter Oszillator beschrieben.

Die US 2001/053176 A1) beschreibt eine Schaltung zur Kompensation der Temperaturabhängigkeit eines spannungsgesteuerten Oszillators.

Der vorliegenden Erfindung liegt die Aufgabe zugrunde, die bestehende Situation zu verbessern.

Diese Aufgabe wird durch die unabhängigen Patentansprüche gelöst.

Vorteilhafte Weiterbildungen finden sich in den abhängigen Patentansprüchen.

Ausführungsbeispiele schaffen einen Datensender mit einer Sendeeinrichtung, die ausgebildet ist, um ein Signal zu senden, und einer Einrichtung zum Verändern [z.B. Modifizieren, Verfälschen oder Verschlechtern] eines Signalparameters, die ausgebildet ist, um zumindest einen Signalparameter [z.B. Modulationsindex, Symbolrate, Sendezeitpunkt, Trägerfrequenz, Phase] des Signals oder einen Parameter [z.B. Taktsignal], von dem der Signalparameter des Signals abhängig ist, zu verändern [z.B. modifizieren, verfälschen oder verschlechtern], wobei der Signalparameter von zumindest einem Umweltparameter in einer Umgebung des Datensenders abhängig ist, wobei die die Einrichtung zum Verändern [z.B. Modifizieren, Verfälschen oder Verschlechtern] des Signalparameters ausgebildet ist, um den zumindest einen Signalparameter, der von dem zumindest einen Umweltparameter abhängig ist, zusätzlich mit einem Offset zu beaufschlagen, um den zumindest einen Signalparameter zu verschlechtern oder verfälschen, wobei der Offset ein zufälliger oder pseudozufälliger Offset ist.

Bei Ausführungsbeispielen kann die Einrichtung zum Verändern des Signalparameters ausgebildet ist, um den zumindest einen Signalparameter mit einem Offset [z.B. Fehler] zu beaufschlagen, um den zumindest einen Signalparameter zu verändern.

Bei Ausführungsbeispielen können der zumindest eine Signalparameter zumindest zwei Signalparameter sein, wobei die Einrichtung zum Verändern des Signalparameters ausgebildet ist, um die zumindest zwei Signalparameter jeweils mit einem Offset [z.B. Fehler] zu beaufschlagen, um die zumindest zwei Signalparameter zu verändern.

Bei Ausführungsbeispielen kann der Offset ein konstanter Offset und/oder ein zeitlich veränderlicher Offset sein.

Bei Ausführungsbeispielen kann der Offset zwei Offsetkomponenten [z.B. Teilfehler] aufweisen, die sich über die Zeit unterschiedlich ändern.

Bei Ausführungsbeispielen kann der Offset zwei Offsetkomponenten [z.B. Teilfehler] aufweisen, wobei eine erste Offsetkomponente der zwei Offsetkomponenten einen konstante Offsetkomponente ist, und wobei eine zweite Offsetkomponente der zwei Offsetkomponenten eine zeitlich veränderliche Offsetkomponente ist.

Bei Ausführungsbeispielen kann der Offset zwei Offsetkomponenten [z.B. Teilfehler] aufweisen, wobei eine erste Offsetkomponente der zwei Offsetkomponenten auf einer zeitlich veränderlichen Funktion [z.B. einer Sinusfunktion] basiert, und wobei eine zweite Offsetkomponente der zwei Offsetkomponenten auf einem zufälligen oder pseudozufälligen Prozess basiert.

Bei Ausführungsbeispielen kann der Datensender ausgebildet sein, um den Offset von einem immanenten Parameter eines Kommunikationssystems des Datensenders oder einer mit dem Signal zu übertragenen Nachricht abzuleiten.

Bei Ausführungsbeispielen kann der Datensender ausgebildet sein, um mit dem Signal oder einem weiteren Signal [z.B. welches vor dem Signal ausgesendet wird] eine verschlüsselte Information über den Offset zu übertragen.

Bei Ausführungsbeispielen kann der Datensender ausgebildet sein, um den Offset aus einem dem Datensender und einem Datenempfänger bekannten kryptografischen Schlüssel oder Schlüsselpaar abzuleiten .

Beispielsweise kann die Generierung der Veränderung [z.B. Verschlechterung] aus einem im Sender und Empfänger bekanntem Schlüssel generiert werden (übliche Verschlüsselungsalgorithmen). Es kann der gleiche Schlüssel wie für die Daten verwendet werden oder einen extra Schlüssel für die Signalparameter. Der Schlüssel kann sich über die Zeit immer wieder ändern. Durch eine asymmetrische Verschlüsselung kann sichergestellt werden, dass nur eine Basistation die Daten physikalisch empfängt. Wenn dem Empfänger der Schlüssel nicht bekannt ist, dann kennt er die Frequenzen / Zeiten / künstliche Phasenfehler nicht und empfängt die Daten nicht korrekt (gleichzeitig eine PHY Adressierung).

Bei Ausführungsbeispielen kann der Datensender ausgebildet sein, um den Signalparameter mit einem von dem Umweltparameter in der Umgebung des Datensenders abhängigen Korrekturfaktor zu beaufschlagen, um einen korrigierten Signalparameter zu erhalten, [z.B. wobei der Korrekturfaktor einen Einfluss des Umweltparameters auf den Signalparameter korrigiert [z.B. reduziert oder kompensiert]], wobei die Einrichtung zum Verändern des Signalparameters ausgebildet ist, um den korrigierten Signalparameter zu verändern [z.B. um Rückschlüsse auf den Umweltparameter in der Umgebung des Datensenders zu verschleiern oder zu verfälschen].

Bei Ausführungsbeispielen kann der Signalparameter ein Modulationsindex sein, wobei der Offset ein Modulationsindexoffset ist.

Bei Ausführungsbeispielen kann der Modulationsindexoffset über eine Mittelungslänge Mittelwertfrei sein.

Bei Ausführungsbeispielen kann der Modulationsindexoffset in Abhängigkeit von einem von einer zu übertragenen Bitsequenz abhängigen akkumulierten Modulationsindexoffset angepasst wird.

Bei Ausführungsbeispielen kann der Signalparameter eine Symbolrate sein, wobei der Offset ein Symbolratenoffset ist.

Bei Ausführungsbeispielen kann der Signalparameter ein Sendezeitpunkt sein, wobei der Offset ein Zeitoffset ist.

Bei Ausführungsbeispielen kann eine Sendepause zwischen zwei aufeinander folgenden Aussendungen des Signals kleiner sein als eine Schätzgenauigkeit in Symboldauern dividiert durch eine doppelte maximale Quarztoleranz.

Beispielsweise kann die Sendepause bei einer Schätzgenauigkeit von z.B. 1/16 der Symboldauer und einem maximalen Quarzfehler von z.B. 20 ppm ca. 1500 Symboldauern betragen. Im Detail entsprechend obiger Formel: 0,0625 / (2* 20*10^-6) = 1562,5 Symbole). Bei doppelter Schätzgenauigkeit oder doppelter Quarztoleranz kann die Sendepause entsprechend die Hälfte betragen.

Bei Ausführungsbeispielen kann der Signalparameter eine Trägerfrequenz sein, wobei der Offset ein Frequenzoffset ist.

Bei Ausführungsbeispielen kann die Einrichtung zum Verändern des Signalparameters ausgebildet sein, um die Trägerfrequenz mit einem zufälligen Frequenzoffset zu beaufschlagen.

Bei Ausführungsbeispielen kann die Einrichtung zum Verändern des Signalparameters ausgebildet sein, um den Frequenzoffset in Abhängigkeit von einem maximal möglichen Offset eines Taktgebers des Datensenders und eines empfängerseitigen Suchbereichs zu wählen.

Bei Ausführungsbeispielen kann der Datensender ausgebildet sein, um die Trägerfrequenz mit einem von dem Umweltparameter in der Umgebung des Datensenders abhängigen Korrekturfaktor zu beaufschlagen, um einen Einfluss des Umweltparameters auf die Trägerfrequenz zu korrigieren, wobei die Einrichtung zum Verändern des Signalparameters ausgebildet ist, um den Frequenzoffset in Abhängigkeit von einem empfängerseitigen Suchbereich und dem Korrekturfaktor zu wählen.

Bei Ausführungsbeispielen kann der Datensender ausgebildet sein, um das Signal basierend auf [z.B. unter Verwendung von] einem Frequenzsprungverfahren unter Verwendung von einer Mehrzahl von Trägerfrequenzen senden, wobei die Einrichtung zum Verändern des Signalparameters ausgebildet ist, um zumindest zwei der Mehrzahl von Trägerfrequenzen mit unterschiedlichen Frequenzoffsets zu beaufschlagen.

Bei Ausführungsbeispielen können die Frequenzoffsets kleiner sein als eine empfängerseitige Toleranzbreite [z. B in Hertz] einer Detektion.

Bei Ausführungsbeispielen kann die Toleranzbreite kleiner sein als ¼ der Symbolrate [z. B in Hertz].

Bei Ausführungsbeispielen kann zumindest einer der Frequenzoffsets [z.B. alle Frequenzoffsets] zwischen diskreten Regelpunkten eines PLL Rasters eines Taktgebers des Datensenders oder vielfachen davon liegen.

Bei Ausführungsbeispielen kann das Signal eine verschlüsselte Information über die unterschiedlichen Frequenzoffsets aufweisen.

Bei Ausführungsbeispielen kann der Datensender ausgebildet sein, um die unterschiedlichen Frequenzoffsets basierend auf einem immanenten Parameter eines Kommunikationssystems des Datensenders oder basierend auf einem Teil der mit dem Signal zu übertragenen Nachricht zu ermitteln.

Bei Ausführungsbeispielen kann der Signalparameter eine Phase sein, wobei der Offset ein Phasenoffset ist.

Bei Ausführungsbeispielen kann die Einrichtung zum Verändern des Signalparameters ausgebildet sein, um zumindest zwei Symbole des Signals mit unterschiedlichen Phasenoffsets zu beaufschlagen.

Bei Ausführungsbeispielen können die Phasenoffsets so gewählt sein, dass diese über eine Mittelungslänge gegen Null konvergieren.

Bei Ausführungsbeispielen kann der Signalparameter eine Sendeleistung sein, wobei der Offset ein Sendeleistungsoffset ist.

Bei Ausführungsbeispielen kann der Umweltparameter
- eine Temperatur,
- eine Luftfeuchtigkeit,
- ein Atmosphärendruck,
- eine elektromagnetische Strahlung,
- eine Helligkeit,
- eine Bewegung und/oder
- eine Vibration
oder eine Änderung derselben bzw. desselben sein.

Bei Ausführungsbeispielen kann der Datensender ausgebildet sein, um in Abhängigkeit von Installationsbedingungen [z.B. des Datensenders] die Veränderung des Signalparameters anzupassen.

Beispielsweise kann der Datensender ausgebildet sein, um basierend auf einer RSSI Messung den Signalparameter mehr oder weniger zu verändern [z.B. verschlechtern]. Ein Knoten, der nah an der Basisstation liegt darf viel Verändern und das Paket wird trotzdem empfangen. Ein Knoten an der Empfindlichkeitsgrenze darf weniger Verändern da die Einflüsse in Summe relevant werden.

Bei Ausführungsbeispielen kann der Datensender ausgebildet sein, um die Installationsbedingungen basierend auf einer RSSI Messung zu ermitteln.

Bei Ausführungsbeispielen kann der Datensender ausgebildet sein, um in Abhängigkeit von einer Telegrammlänge oder Sub-Datenpaketlänge oder einer Anzahl an codierten Bits die Veränderung des Signalparameters adaptiv anzupassen.

Beispielsweise kann der Datensender abhängig von der Telegrammlänge/Anzahl an codierten Bits mehr Veränderung [z. B. Verschlechterung] oder weniger zufügen. Zum Beispiel kann der Datensender ausgebildet sein, um kürzere Telegramme mit mehr Frequenzoffset zu beaufschlagen als längere Telegramme.

Bei Ausführungsbeispielen kann der Datensender ausgebildet sein, um zwei Signalparameter des Signals mit Offsets zu beaufschlagen, wobei sich die Offsets der zwei Signalparameter zumindest teilweise gegenseitig kompensieren.

Zum Beispiel kann der Datensender ausgebildet sein, um eine Trägerfrequenz des Signals mit Frequenzoffset zu beaufschlagen, der in eine Richtung gerichtet ist und um eine Symbolrate mit einem Offset zu beaufschlagen, der in die entgegengesetzte Richtung gerichtet ist. Wenn beide Offsets sind einzeln groß (z.B. gleich groß), dann werden sich die Offsets im Empfänger kompensieren, so dass der Empfang funktioniert. Beispielsweise können sich der Symbolratenoffset und der Frequenzoffset einigermaßen kompensieren.

Bei Ausführungsbeispielen können dem Datensender Empfangsgrenzen eines Datenempfängers, der das Signal empfängt, bekannt sein, wobei der Datensender ausgebildet ist, um den Signalparameter unter Berücksichtigung der Empfangsgrenzen zu verändern [z.B. verfälschen].

Beispielsweise kann der Datensender ausgebildet sein, um die Empfangsgrenzen durch die Veränderung auszunutzen.

Beispielsweise kann die Verschleierung für einen kohärenten Empfänger größer sein als für einen nicht kohärenten Empfänger.

Weitere Ausführungsbeispiele schaffen ein System mit einem Datensender gem. einem der hierin beschriebenen Ausführungsbeispiele und einem Datenempfänger, wobei der Datenempfänger ausgebildet ist, um ein Signal zu empfangen, wobei zumindest ein Signalparameter des Signals verändert [z.B. verschlechtert] ist.

Beispielsweise kann der Datenempfänger so implementiert sein, dass der Datenempfänger zusätzliche Toleranzen durch die Verfälschung abdecken kann.

Weitere Ausführungsbeispiele schaffen einen Datenempfänger, wobei der Datenempfänger ausgebildet ist, um ein Signal eines Datensenders zu empfangen, wobei das Signal oder eine Erzeugung des Signals von einem Taktsignal eines Taktgebers des Datensenders abhängig ist, wobei der Datenempfänger ausgebildet ist, um einen Signalparameter des Signals zu ermitteln, und um basierend auf dem Signalparameter einen Umweltparameter zu ermitteln, dem der Taktgeber des Datensenders oder das Signal ausgesetzt ist, wobei der Datensender ausgebildet ist, um eine datensenderseitige Veränderung des Signalparameters vor der Schätzung des Signalparameters oder des Umweltparameters zu kompensieren.

Bei Ausführungsbeispielen kann dem Datenempfänger die datensenderseitige Veränderung des Signalparameters [z.B. der Offset, mit dem der Signalparameter datensenderseitig beaufschlagt ist] bekannt sein.

Bei Ausführungsbeispielen kann der Datenempfänger ausgebildet sein, um die datensenderseitige Veränderung des Signalparameters [z.B. der Offset, mit dem der Signalparameter datensenderseitig beaufschlagt ist] von einem immanenten Parameter des Kommunikationssystems des Datenempfängers oder einer mit dem Signal übertragenen Nachricht abzuleiten.

Bei Ausführungsbeispielen kann der Datenempfänger ausgebildet sein, um die datensenderseitige Veränderung des Signalparameters [z.B. der Offset, mit dem der Signalparameter datensenderseitig beaufschlagt ist] von einem dem Datensender und dem Datenempfänger bekannten kryptografischen Schlüssel oder Schlüsselpaar abzuleiten.

Weitere Ausführungsbeispiele schaffen einen Datenempfänger, wobei der Datenempfänger ausgebildet ist, um ein Signal eines Datensenders zu empfangen, wobei das Signal oder eine Erzeugung des Signals von einem Taktsignal eines Taktgebers des Datensenders abhängig ist, wobei der Datenempfänger implementiert ist, um eine zusätzliche Toleranz, die durch eine datensenderseitige Veränderung [z.B. Verschlechterung] zumindest eines Signalparameters des Signals bedingt ist, zu kompensieren [z.B. wobei die zusätzliche Toleranz zusätzlich zu einer [z.B. natürlichen] Toleranz ist, die durch eine datensenderseitige Veränderung des zumindest einen Signalparameters durch einen Umweltparameter bedingt ist] [z.B. +- 20 kHz durch natürliche Phänomene die Temperatur verraten, deswegen zusätzlich +- 40 kHz künstliche Veränderung. Der Empfänger kann +- 60 kHz anstatt +- 20 kHz.]

Bei Ausführungsbeispielen kann dem Datenempfänger die datensenderseitige Veränderung des Signalparameters [z.B. der Offset, mit dem der Signalparameter datensenderseitig beaufschlagt ist] bekannt sein.

Bei Ausführungsbeispielen kann der Datenempfänger ausgebildet sein, um die datensenderseitige Veränderung des Signalparameters [z.B. der Offset, mit dem der Signalparameter datensenderseitig beaufschlagt ist] von einem immanenten Parameter des Kommunikationssystems des Datenempfängers oder einer mit dem Signal übertragenen Nachricht abzuleiten.

Bei Ausführungsbeispielen kann der Datenempfänger ausgebildet sein, um die datensenderseitige Veränderung des Signalparameters [z.B. der Offset, mit dem der Signalparameter datensenderseitig beaufschlagt ist] von einem dem Datensender und dem Datenempfänger bekannten kryptografischen Schlüssel oder Schlüsselpaar abzuleiten.

Weitere Ausführungsbeispiele schaffen ein System mit einem Datensender gem. einem der hierin beschriebenen Ausführungsbeispiele und einem Datenempfänger gem. einem der hierin beschriebenen Ausführungsbeispiele.

Weitere Ausführungsbeispiele schaffen ein Verfahren. Das Verfahren umfasst einen Schritt des Erzeugens eines Sendesignals, wobei bei dem Erzeugen des Sendesignals zumindest ein Signalparameter [z.B. Modulationsindex, Symbolrate, Sendezeitpunkt, Trägerfrequenz, Phase] des Signals oder einen Parameter [z.B. Taktsignal], von dem der Signalparameter des Signals abhängig ist, verändert wird. Das Verfahren umfasst ferner einen Schritt des Sendens des Sendesignals, wobei bei dem Erzeugen des Sendesignals der zumindest eine Signalparameter, der von dem der von dem zumindest einen Umweltparameter abhängig ist, zusätzlich mit einem Offset beaufschlagt wird, um den zumindest einen Signalparameter zu verschlechtern oder verfälschen, wobei der Offset ein zufälliger oder pseudozufälliger Offset ist.

Weitere Ausführungsbeispiele schaffen ein Verfahren. Das Verfahren umfasst einen Schritt des Empfangens eines Signals eines Datensenders, wobei das Signal oder eine Erzeugung des Signals von einem Taktsignal eines Taktgebers des Datensenders abhängig ist. Das Verfahren umfasst ferner einen Schritt des Ermittelns eines Signalparameters (112) des empfangenen Signals. Das Verfahren umfasst ferner einen Schritt des Ermittelns eines Umweltparameters, dem der Taktgeber des Datensenders (130) oder das Signal (120) ausgesetzt ist, basierend auf dem ermittelten Signalparameter. Das Verfahren umfasst ferner einen Schritt des Kompensierens einer datensenderseitigen Veränderung des Signalparameters vor der Ermittlung des Signalparameters oder des Umweltparameters.

Der vorliegenden Erfindung liegt die Idee zugrunde, Umgebungsbedingungen (z.B. Umweltparameter) in einer Umgebung eines Datensenders, die bedingt durch ihren Einfluss auf die Eigenschaften eines übertragenen Signals zu einem Datenempfängern mitübertragen werden, zu verschleiern [z.B. um eine empfängerseitige Schätzung der Umgebungsbedingungen (z.B. eines oder mehreren Umweltparameter) durch Auswertung der Signaleigenschaften (z.B. eines oder mehrerer Signalparameter) zu erschweren].

Bei Ausführungsbeispielen können bekannte Umwelteinflüsse datensenderseitig kompensiert werden.

Bei Ausführungsbeispielen können [z.B. verbleibende] Umwelteinflüsse durch künstliche Abweichungen [z.B. der Signalparameter] verschleiert werden.

Bei Ausführungsbeispielen kann eine empfängerseitige Schätzgenauigkeit bestimmter Signalparameter durch eine Manipulation des Signals [z.B. der Signalparameter] reduziert werden.

Ausführungsbeispiele der vorliegenden Erfindung werden bezugnehmend auf die beiliegenden Figuren näher beschrieben. Es zeigen:
- Fig. 1: in einem Diagramm eine Abweichung eines hochfrequenten Taktgebers von der Referenzfrequenz in Abhängigkeit von der Temperatur;
- Fig. 2: in einem Diagramm eine Abweichung eines niederfrequenten Taktgebers von der Referenzfrequenz in Abhängigkeit von der Temperatur;
- Fig. 3a: zeigt eine schematische Ansicht eines Systems mit einem Datensender und einem Datenempfänger sowie eine Übertragung eines Signals zwischen dem Datensender und dem Datenempfänger, wobei der Datenempfänger durch Auswertung zumindest eines Signalparameters des Signals auf einen Umweltparameter in der Umgebung des Datensenders schließen kann, gemäß einem Ausführungsbeispiel der vorliegenden Erfindung;
- Fig. 3b: zeigt eine schematische Ansicht eines Systems eines Systems mit einem Datensender und einem Datenempfänger sowie eine Übertragung eines Signals zwischen dem Datensender und dem Datenempfänger mit einer Verschleierung zumindest eines Signalparameters des Signals, gemäß einem Ausführungsbeispiel der vorliegenden Erfindung;
- Fig. 4: ein schematisches Blockschaltbild eines Systems mit einem Datensender und einem Datenempfänger, gemäß einem Ausführungsbeispiel der vorliegenden Erfindung;
- Fig. 5: eine schematische Ansicht des Frequenzsuchbereichs des Datenempfängers, eines maximal zulässigen Frequenzversatzbereichs des Signals, der bedingt durch einen maximalen zulässigen Quarzversatz auftreten kann, sowie eines verbleibenden Bereichs für den Frequenzoffset;
- Fig. 6: eine schematische Ansicht des Frequenzsuchbereichs des Datenempfängers, eines maximal zulässigen Frequenzversatzbereichs des Signals, der bedingt durch einen maximalen zulässigen Quarzversatz auftreten kann, jeweils vor und nach einer Korrektur eines Einflusses des Umweltparameters, sowie eines verbleibenden Bereichs für den Frequenzoffset;
- Fig. 7: eine schematische Ansicht eines PLL Rasters des Datensenders zu einem ersten Zeitpunkt mit Umgebungstemperatur T1, des PLL Rasters des Datensenders zu einem zweiten Zeitpunkt mit Umgebungstemperatur T2 sowie ein PLL Raster für die Rekonstruktion im Datenempfänger, wobei die Übertragungen jeweils mit einem (pseudo)zufälligen Offset erfolgen;
- Fig. 8: ein Konstellationsdiagramm einer π/4-Offset QPSK;
- Fig. 9: in einem Diagramm eine Standardabweichung der Frequenzoffsetschätzung aufgetragen über der Mittelungslänge im Empfänger/Angreifer bei Aufbringung eines zufälligen gleichverteilten Offsets von ±2 kHz auf jede Aussendung;
- Fig. 10: in einem Diagramm eine Standardabweichung der Frequenzoffsetschätzung aufgetragen über der Mittelungslänge im Empfänger/Angreifer bei Aufbringung zweier zufälliger gleichverteilter Offsets von ±1 kHz auf jede Aussendung, wobei der erste Prozess einen neuen Offset für jede Aussendung liefert und der zweite Offset sich alle 50 Aussendungen ändert;
- Fig. 11: in einem Diagramm eine Standardabweichung der Frequenzoffsetschätzung aufgetragen über der Mittelungslänge im Empfänger/Angreifer bei Aufbringung zweier zufälliger gleichverteilter Offsets von ±1 kHz auf jede Aussendung, wobei der erste Prozess einen neuen Offset für liefert und der zweite Offset sich alle 100 Aussendungen ändert;
- Fig. 12: in einem Diagramm eine Standardabweichung der Frequenzoffsetschätzung aufgetragen über der Mittelungslänge im Empfänger/Angreifer bei Aufbringung zweier Offsets von ±1 kHz auf jede Aussendung, wobei der erste Prozess einen neuen Offset für jede Aussendung liefert und der zweite Offset aus einer Sinus-Kurve mit der nominalen Frequenz ω=0.25 besteht;
- Fig. 13: ein schematisches Blockschaltbild eines Systems mit einem Datensender und einem Datenempfänger, gemäß einem Ausführungsbeispiel der vorliegenden Erfindung;
- Fig. 14: ein Flussdiagramm eines Verfahrens zum Senden eines Signals, gemäß einem Ausführungsbeispiel der vorliegenden Erfindung; und
- Fig. 15: ein Flussdiagramm eines Verfahrens zum Ermitteln eines Umweltparameters in der Umgebung eines Datensenders, gemäß einem Ausführungsbeispiel der vorliegenden Erfindung.

In der nachfolgenden Beschreibung der Ausführungsbeispiele der vorliegenden Erfindung werden in den Figuren gleiche oder gleichwirkende Elemente mit dem gleichen Bezugszeichen versehen, so dass deren Beschreibung untereinander austauschbar ist.

In typischen Funksystemen wird zur Erzeugung von Übertragungssignalen eine Referenzfrequenz benötigt, aus welcher der jeweilige Funkchip bzw. das jeweilige Frontend die notwendigen Takte ableitet. Diese Referenzfrequenz wird typischerweise durch einen Taktgeber, wie z.B. einen Schwingquarz (Quarz) [1], zur Verfügung gestellt. Datensender, wie z.B. Knoten bzw. Sensorknoten, umfassen in der Regel zwei unterschiedliche Taktgeber. Dies kann beispielsweise ein hochfrequenter (HF) Taktgeber, der mit einer Frequenz von mehrere MHz schwingt, und ein niederfrequenter Taktgeber (LF), der üblicherweise mit einer Frequenz von 32768 Hz schwingt, sein. Der hochfrequente Taktgeber ist in der Regel genauer (in Hinsicht auf die Abweichung von der Nominalfrequenz) und stromhungriger. Der niederfrequente ist ungenauer dafür aber sehr stromsparend.

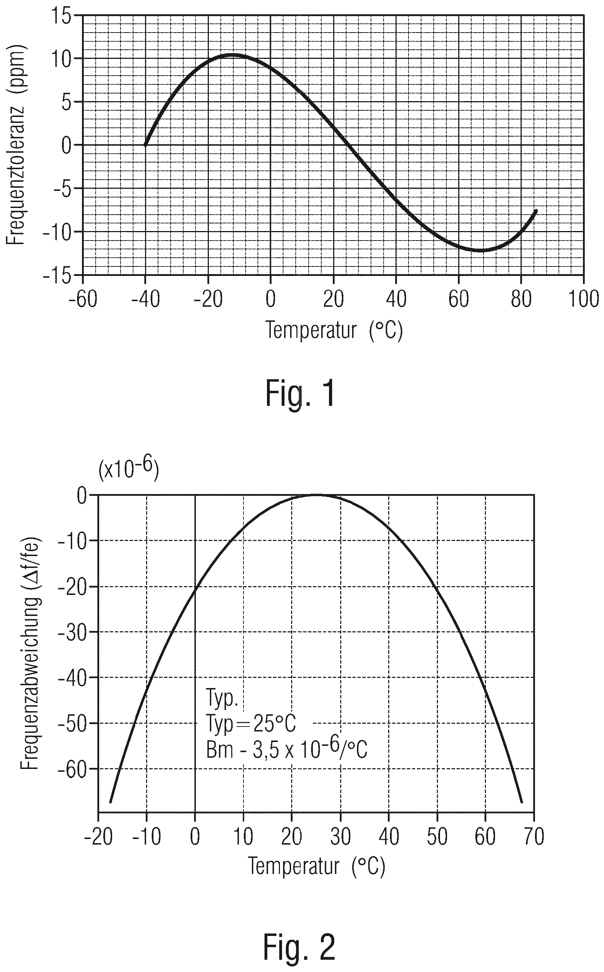

Die von den Taktgebern (Schwingquarzen) zur Verfügung gestellten Referenzfrequenzen sind jedoch typischerweise von Umweltparametern abhängig. In Fig. 1 ist beispielhaft die Abhängigkeit der Referenzfrequenz über der Temperatur für einen beliebigen hochfrequenten Taktgeber zu sehen (Frequenzstabilität eines hochfrequenten Schwingquarzes über der Umgebungstemperatur [2]), während in Fig. 2 beispielhaft die Abhängigkeit der Referenzfrequenz über der Temperatur für einen beliebigen niederfrequenten Taktgeber gezeigt ist (Frequenzstabilität eines niederfrequenten (LF) 32768 kHz Quarzes über der Temperatur [5]). Dabei beschreiben die Ordinaten jeweils die Frequenztoleranz in ppm und die Abszissen jeweils die Temperatur in °C.

Neben der Temperatur gibt es weitere Abhängigkeiten des Taktgebers (Quarzes) von zumindest folgenden Parametern:
- Luftfeuchtigkeit
- Druck
- EM-Strahlung
- Helligkeit
- Vibration/Bewegung

All diese Parameter haben einen Einfluss auf die vom Taktgeber (Schwingquarz) zur Verfügung gestellte Referenzfrequenz. Wird diese Referenzfrequenz für die Erzeugung der Übertragungssignale eingesetzt, wirken sich diese Abhängigkeiten direkt auf das Übertragungssignal und somit auf die Übertragungsparameter (Signaleigenschaften) aus. Folgende Übertragungsparameter sind dabei vor spezieller Bedeutung:
- Sendefrequenz
- Sendezeitpunkt
- Symbolrate
- Modulationsindex (bei Frequenzumtastungsverfahren, wie z.B. FSK oder GMSK)
- Doppler (nur bei Vibration/Bewegung)

Bei der Erzeugung und Abstrahlung eines Funksignals in einem Sender wirken sich somit Umgebungsbedingungen des Senders auf das abgestrahlte Funksignal aus. Insbesondere die Frequenz von Oszillatoren, die in dem Sender als Referenz für Träger- oder Modulationsfrequenzen dient, kann durch Umwelteinflüsse verändert werden. Beispielsweise korreliert bei nicht temperaturkorrigierten Oszillatoren (Quarzen) die Frequenz mit der Umgebungstemperatur. Analoge Effekte können auch für Luftfeuchtigkeit, Elektromagnetische Strahlung, Helligkeit oder Vibrationen auftreten. Darüber hinaus wirken sich Bewegungen oder Vibrationen des Senders und dessen Antenne durch Dopplerverschiebungen in dem abgestrahlten Signal aus.

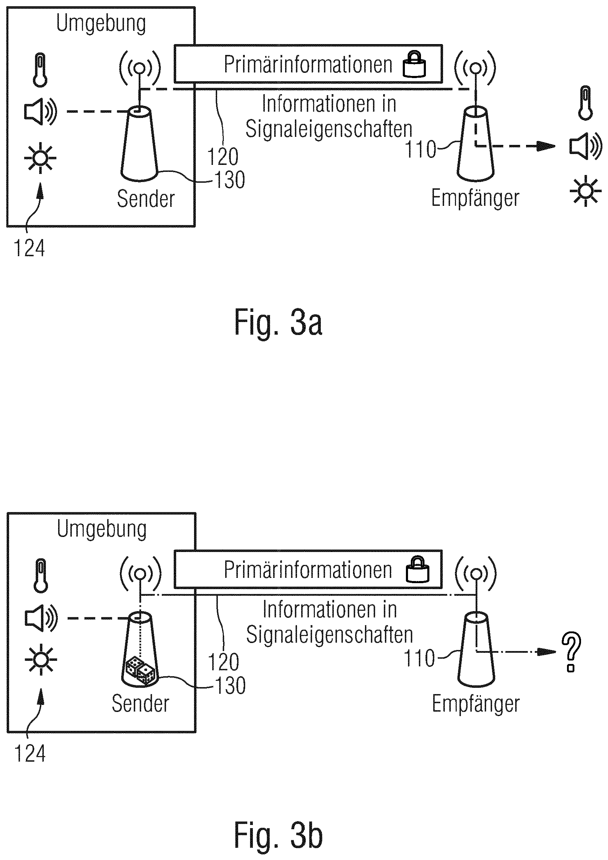

Durch diese Eigenschaften trägt das abgestrahlte Signal neben der Primärinformation weitere implizite Informationen über die Umgebungsbedingungen oder Eigenschaften des Senders. Zur Veranschaulichung ist dieses Phänomen grafisch in Fig. 3a gezeigt

Im Detail zeigt Fig. 3a eine schematische Ansicht eines Systems 100 mit einem Datensender 130 und einem Datenempfänger 110 sowie eine Übertragung eines Signals 120 zwischen dem Datensender 130 und dem Datenempfänger 110, wobei der Datenempfänger 110 durch Auswertung zumindest eines Signalparameters des Signals 120 auf einen Umweltparameter 124 in der Umgebung des Datensenders 130 schließen kann.

Wie in Fig. 3a zu erkennen ist, wirken sich die Umgebungsbedingungen auf Seiten des Datensenders 130 auf das von dem Datensender 130 gesendete Signal 120 aus, so dass das Signal 120 neben einer Primärinformation zusätzlich eine Information über die Umgebungsbedingungen in den Signaleigenschaften aufweist. Mit anderen Worten, Fig. 3a zeigt eine Funkkommunikation zwischen Sender 130 und Empfänger 110, wobei neben der gesendeten Primärinformation auch die Information über die Signaleigenschaften gezeigt ist.

Ist es nun möglich am Empfänger 110 die Signaleigenschaften zu bestimmen (z.B. zu schätzen), kann über den Zusammenhang der Signaleigenschaften mit den Umgebungsbedingungen direkt auf die Umgebungsbedingungen am Sender 130, am Empfänger 110 oder dazwischen geschlossen werden. Da die größten Toleranzen allerdings am Sender 130 entstehen werden meistens Umgebungsbedingungen am Sender bestimmt. Die Temperatur kann beispielsweise aus einem ermittelten Frequenzoffset (Abweichung zur erwarteten Nominalfrequenz) über die in Fig. 1 gezeigte Kurve am Sender bestimmt werden. Moderne Software Defined Radio (SDR) Empfänger ermöglichen eine sehr genaue Bestimmung der Parameter eines empfangen Signals. So kann beispielsweise bereits eine Frequenzabweichung im Bereich weniger Hz erfasst werden. Dies erlaubt die vollständige oder teilweise Rekonstruktion von Umgebungsbedingungen oder Eigenschaften des Senders aus den ermittelten Signalparametern im Empfänger.

Da diese Metainformationen durch physikalische Eigenschaften auf Signalebene transportiert werden, werden diese nicht durch übergeordnete Maßnahmen des Zugriffsschutzes wie Verschlüsslung erfasst. Die Rekonstruktion kann somit durch beliebige, nicht autorisierte, Empfänger erfolgen. Dies stellt eine erhebliche Problematik in Bezug auf Datenschutz und Sicherheit für alle Funksysteme mit Sendern in nicht-öffentlichen Bereichen dar.

Durch die hohe Dichte an Geräten mit Funkschnittstellen ergeben sich weitreichende Angriffsflächen. Potentielle Szenarien betreffen sowohl private Haushalte als auch industrielle oder staatliche Einrichtungen.

Hierbei ist die Bestimmung der Umgebungsbedingungen nicht von einem bestimmten Funksystem abhängig, es kann jedes beliebige Funksystem (z. B. WLAN, Bluetooth, Funkwetterstationen, ...) zur Bestimmung eigesetzt werden. Sind mehrere Systeme vorhanden, kann auch eine Kombination bei der Bestimmung angewendet werden.

Beispielsweise lässt sich an einem Temperaturverlauf über dem Tag feststellen, ob sich Personen ein einem Raum, einer Wohnung oder einem Haus aufhalten. Diese Information kann beispielsweise von Einbrechern genutzt oder zur Spionage benutzt werden.

Da häufig neben der Bestimmung der Umgebungsbedingungen auch eine Lokalisierung der Sender erfolgen kann, handelt es sich um personenbezogene Daten, welche nach dem neuen Datenschutzgesetz pseudonymisiert sein müssen [4].

Ausführungsbeispiele der vorliegenden Erfindung befassen sich mit Techniken, mit denen die Signaleigenschaften und somit die Umgebungsbedingungen verschleiert werden können, wie dies in Fig. 3b angedeutet ist.

Im Detail zeigt Fig. 3b eine schematische Ansicht eines Systems mit einem Datensender 130 und einem Datenempfänger 110 sowie eine Übertragung eines Signals 120 zwischen dem Datensender und dem Datenempfänger mit einer Verschleierung zumindest eines Signalparameters des Signals 120, gemäß einem Ausführungsbeispiel der vorliegenden Erfindung. Bedingt durch eine Verschleierung zumindest eines Signalparameters des Signals 120 ist es dem Datenempfänger 110 nicht mehr möglich durch Auswertung des zumindest einen Signalparameters auf einen Umweltparameter 124 in der Umgebung des Datensenders 130 zu schließen.

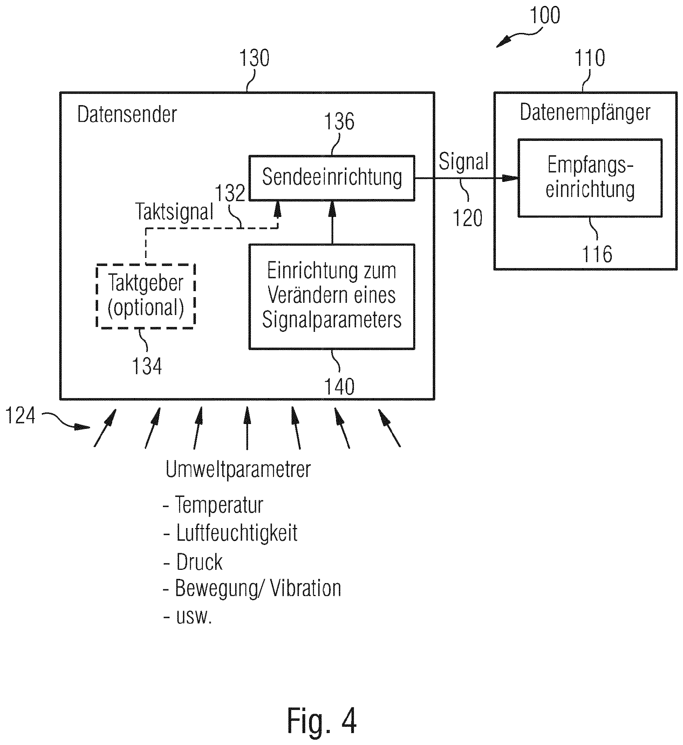

Fig. 4 zeigt ein schematisches Blockschaltbild eines Systems 100 mit einem Datensender 130 und einem Datenempfänger 110, gemäß einem Ausführungsbeispiel der vorliegenden Erfindung.

Der Datensender 130 umfasst eine Sendeeinrichtung 136 (z.B. Sender, Funkchip / Frontend), die ausgebildet ist, um ein Signal 120 zu senden.

Der Datenempfänger 110 umfasst eine Empfangseinrichtung 116 (z.B. Empfänger), die ausgebildet ist, um das Signal 120 zu empfangen.

Ein Umweltparameter 124, der auf den Datensender 130 einwirkt, kann die Sendeeinrichtung 136 oder andere Komponenten des Datensenders 130, wie z.B. einen Taktgeber 134 des Datensenders, beeinflussen, so dass zumindest ein Signalparameter des Signal 120 von dem Umweltparameter 124 in der Umgebung des Datensenders 130 abhängig ist.

Beispielsweise kann der Umweltparameter 124 (z.B. eine Temperatur oder Temperaturänderung), der auf den Taktgeber 134 des Datensenders 130 einwirkt, den Taktgeber 134 und damit zumindest einen Signalparameter (z.B. Frequenz) des von dem Taktgeber 134 bereitgestellten Taktsignals 132 beeinflussen. Da eine Generierung des von dem Datensender 130 gesendeten Signals 120 auf dem Taktsignal 132 des Taktgebers basiert, beeinflusst der Umweltparameter 124 nicht nur einen Signalparameter (z.B. Frequenz) des Taktsignals 132, sondern auch einen Signalparameter (z.B. eine Signaleigenschaft, wie z.B. eine Trägerfrequenz) des von dem Datensender 130 gesendeten Signals 120.

Der Datenempfänger 110 kann somit durch Auswerten des Signalparameters 112 des empfangenen Signals 120 auf den Umweltparameter (z.B. Temperatur) in der Umgebung des Datensenders 130 schließen bzw. diesen schätzen.

Bei Ausführungsbeispielen umfasst der Datensender 130 daher eine Einrichtung 140 zum Verändern (z.B. Modifizieren, Verfälschen, Verschleiern oder Verschlechtern) eines Signalparameters, die ausgebildet ist, um zumindest einen Signalparameter (z.B. Modulationsindex, Symbolrate, Sendezeitpunkt, Trägerfrequenz, Phase) des Signals 120 oder einen Parameter (z.B. Taktsignal 132), von dem der Signalparameter des Signals 120 abhängig ist, zu verändern (z.B. modifizieren, verschleiern, verfälschen oder verschlechtern). Durch die Veränderung des zumindest einen Signalparameters des Signals 120 kann eine empfängerseitige Schätzung des Umweltparameters 124 basierend auf einer Auswertung des zumindest einen Signalparameters erschwert werden.

Die Einrichtung 140 zum Verändern des Signalparameters ist ausgebildet, um den zumindest einen Signalparameter mit einem Offset (z.B. einem Fehler) zu beaufschlagen, um den zumindest einen Signalparameter zu verändern (z.B. zu verschlechtern).

Beispielsweise kann die Einrichtung 140 zum Verändern des Signalparameters ausgebildet sein, um den zumindest einen Signalparameter direkt mit einem Offset zu beaufschlagen, um den Signalparameter zu verändern. Natürlich kann die Einrichtung 140 zum Verändern des Signalparameters auch ausgebildet sein, um einen anderen Parameter, von dem der Signalparameter abhängig ist, mit einem Offset zu beaufschlagen, wie z.B. eine Taktfrequenz des Taktsignals 132 des Taktgebers 134.

Bei Ausführungsbeispielen können der zumindest eine Signalparameter zumindest zwei Signalparameter sein, wobei die Einrichtung zum Verändern des Signalparameters ausgebildet sein kann, um die zumindest zwei Signalparameter jeweils mit einem Offset [z.B. Fehler] zu beaufschlagen, um die zumindest zwei Signalparameter zu verändern.

Bei Ausführungsbeispielen kann der Offset ein konstanter Offset und/oder ein zeitlich veränderlicher Offset sein.

Bei Ausführungsbeispielen kann der Offset ein zufälliger oder pseudozufälliger Offset sein.

Im Folgenden werden weitere Ausführungsbeispiele der vorliegenden Erfindung näher beschrieben.

### 1. Messgenauigkeit der Empfangsparameter verändern (z.B. verschlechtern)

Die folgenden Ausführungsbeispiele beruhen darauf, dass dem Datensender 130 die Umgebungsbedingungen (z.B. Umweltparameter 124) nicht notwendigerweise bekannt sein müssen. Das heißt, der Datensender 130 hat im Allgemeinen keine Information über seine Umgebungsbedingungen. Die folgenden Ausführungsbeispiele sind jedoch genauso anwendbar, falls dem Datensender 130 die Umgebungsbedingungen bekannt sind.

### 1.1 Veränderung (z.B. Verschlechterung) der Modulation

Zur Bestimmung der Umgebungsbedingungen am Datensender 130 kann unter anderem die Genauigkeit der Modulation eingesetzt werden.

So kann beispielsweise bei einer FSK-Modulation (FSK = Frequency Shift Keying, dt. Frequenzumtastung) die Abweichung des Modulationsindexes vom erwarteten Wert bestimmt werden. Aus dieser Abweichung lassen sich dann im Anschluss die Umgebungsbedingungen am Datensender 130 ableiten.

Typischerweise kann der Empfänger 116 des Datenempfängers 110 einen gewissen Grad an Modulationsfehler tolerieren ohne eine signifikant schlechtere Performance bei der Decodierung zu erhalten.

Dieses Phänomen kann ausgenutzt werden, in dem die Modulation künstlich so schlecht gemacht wird, dass nicht mehr auf die Umgebungsbedingungen im Datensender 130 geschlossen werden kann oder die Genauigkeit nicht mehr gut genug ist. Hierbei gilt es zwei Fälle zu unterscheiden:
- Der Empfänger 116 des Datenempfängers 110 kann weitaus größere Modulationsfehler tolerieren, als sie durch die Umgebungsbedingungen im Datensender 130 beeinflusst werden.
- Der Empfänger 116 des Datenempfängers 110 kann nur Modulationsfehler tolerieren, die in der Größenordnung der Umgebungsbedingungen liegen.

Im ersten Fall ist es ausreichend einen konstanten zufälligen Fehler zu addieren, welcher deutlich größer als ein maximal zu erwartender Fehler durch die Umgebungsbedingungen ist. Eine Veränderung des zufälligen Fehlers ist jederzeit möglich. Durch einen konstanten Fehler lässt sich allerdings nur der exakte Wert verschleiern, um Änderungen zu verschleiern ist ein zeitlich veränderlicher Prozess nötig.

Im zweiten Fall, kann bevorzugt ein zeitlich veränderlicher Offset zum Fehler aus den Umgebungsbedingungen addiert werden. Dies kann beispielsweise über einen (gleichverteilten) Zufallsprozess erfolgen.

Natürlich ist auch eine Kombination aus konstanten (selten ändernden) und einem zeitlich veränderlichen Fehler angewandt werden. Es muss nur beachtet werden, dass der Gesamtfehler kleiner als die zulässige Toleranz des Systems ist.

Der zufällig addierte Fehler sollte im Idealfall nur dem Datensender 130 bekannt sein, damit eine Korrektur dieses Wertes bei Empfang nicht möglich ist und somit nicht auf die Umgebungsbedingungen zurückgerechnet werden kann.

Wird im Datenempfänger 110 jedoch explizit aus diesem Parameter auf die Umgebungsbedingungen des Datensenders 130 geschlossen, kann dieser Wert dem Datenempfänger 110 vorab oder im Telegramm (oder Nachricht) verschlüsselt mitgeteilt werden. Ein Angreifer, welcher die verschlüsselten Daten nicht entschlüsseln kann, hat somit keine Möglichkeit die Umgebungsbedingungen des Datensenders 130 zu bestimmen.

Alternativ zur direkten Übertragung des gewählten Frequenzoffsets kann dieser auch auf Basis eines immanenten Parameters des Systems bestimmt werden. Dies kann beispielsweise ein Teil- der Nachricht oder einer vorab versendeten verschlüsselten Nachricht sein. Dies bietet den Vorteil, dass zwischen dem Datenempfänger 110 und den Datensender 100 keine zusätzliche Information über die Wahl des/der verwendeten Offsets signalisiert/übertragen werden muss.

Bei Ausführungsbeispielen kann auf Datensenderseite zu dem Modulationsfehler, welcher durch die Umgebungsbedingungen am Datensender 130 auftritt, ein künstlicher Fehler hinzuaddiert werden. Je nach Szenario kann dies ein konstanter Wert oder ein zeitlich veränderlicher Wert sein.

Bei Ausführungsbeispielen kann auf Datensenderseite der Modulationsindexfehler so gewählt werden, dass der Modulationsindexfehler über eine Mittelungslänge Bias Free (Mittelwertfrei) ist.

Bei Ausführungsbeispielen kann auf Datensenderseite abhängig von den Bitsequenz bei der Übertragung der akkumulierte Modulationsindex-Fehler bestimmt werden, adaptiv kann mehr oder weniger Verschleierung zufügt werden.

### 1.2 Veränderung (z.B. Verschlechterung) der Symbolrate

Ähnlich wie die Verwendung des Modulationsfehlers, kann auch die Abweichung der übertragenen Symbolrate von der Erwarteten zur Bestimmung der Umgebungsbedingungen am Datensender 130 eingesetzt werden.

In ähnlicher Weise zum Modulationsfehler kann der Empfänger 116 des Datenempfängers 110 ebenfalls (zusätzlich) einen gewissen Grad an Symbolratenfehler tolerieren, ohne dass eine signifikant schlechtere Performance zu erwarten ist.

Dieses Phänomen kann auch hier ausgenutzt werden, in dem die Symbolrate künstlich so schlecht gemacht wird, dass nicht mehr auf die Umgebungsbedingungen im Datensender 130 geschlossen werden kann oder die Genauigkeit nicht mehr gut genug ist. Hierbei gilt es zwei Fälle zu unterscheiden:
- Der Empfänger 116 des Datenempfängers 110 kann weitaus größere Symbolratenfehler tolerieren, als sie durch die Umgebungsbedingungen im Datensender 130 beeinflusst werden.
- Der Empfänger 116 des Datenempfängers 110 kann nur Symbolratenfehler tolerieren, die in der Größenordnung der Umgebungsbedingungen liegen.

Es gilt die gleiche Fallunterscheidung wie bei der Verschlechterung der Modulation. Hier muss jedoch ebenfalls beachtet werden, dass der gesamte künstliche Fehler kleiner als die Toleranz des Empfänger 116 des Datenempfängers 110 ist, aber mindestens so groß wie der Fehler durch die Umgebungsbedingungen ist.

Bei Ausführungsbeispielen kann auf Datensenderseite zu dem Symbolratenfehler, welcher durch die Umgebungsbedingungen am Datensender 130 auftritt, ein künstlicher Fehler hinzuaddiert werden. Je nach Szenario kann dies ein konstanter Wert, ein zeitlich veränderlicher Wert oder eine Kombination sein.

Bei Ausführungsbeispielen kann der Empfänger 116 des Datenempfängers 110 ausgebildet sein, um größere Toleranzen in der Symbolrate abarbeiten zu können.

### 1.3 Veränderung (z.B. Verschlechterung) der Zeitdifferenzen

Eine andere Methode zur Bestimmung der Umgebungsbedingungen am Datensender 130 ist die Messung der Zeit zwischen zwei Aussendungen, falls die nominelle Zeit zwischen den Aussendungen bekannt ist.

Diese Methodik kann auch angewendet werden, falls eine Übertragung aus mehreren Datenpaketen oder Teildatenpaketen besteht. Dies ist beispielsweise bei Bluetooth oder MIOTY der Fall. Dort wird zusätzlich ein Frequenzsprungverfahren (engl. Frequency Hopping) eingesetzt.

Nachdem zumindest zwei (Teil-)Datenpakete empfangen worden sind, kann für jedes (Teil-)Datenpaket der relative Empfangszeitpunkt bestimmt werden. Die Differenz aus beiden Zeitpunkten gibt die Zeitverzögerung zwischen den (Teil-)Datenpaketen an. Wird dieser Wert mit dem erwarteten Wert vergleichen, kann daraus auf den Zeitfehler und damit wieder auf die Umgebungsbedingungen am Datensender 130 geschlossen werden.

Ähnlich zu den beiden vorherigen Verschleierungsmethoden für die Modulation und die Symbolrate, kann auch hier ein zufälliger Zeitversatz zwischen den Aussendungen bzw. den (Teil-)Datenpaketen erfolgen.

Verfügt der Datenempfänger 110 über eine kontinuierliche Detektion der Aussendungen / (Teil-)Datenpakete ist nichts weiter zu beachten, da der Datenempfänger 110 dauerhaft auf neue Aussendungen hört. Wird jedoch eine zeitlich synchronisierte Übertragung zu einer vorherigen Aussendung (auch vom Datenempfänger, z.B. ein Beacon) durchgeführt, erfolgt in der Regel keine weitere Detektion der der Aussendungen / (Teil-)Datenpakete. Durch die Addition der zufälligen Zeitoffsets, kann der Datenempfänger 110 die weiteren Aussendungen / (Teil-)Datenpakete jedoch nicht mehr decodieren. Um dieses Problem zu lösen, kann bevorzugt dem eigentlichen Datenempfänger 110 vorab verschlüsselt die verwendeten Zeitoffsets oder die Abbildungsfunktion mitgeteilt werden oder dem Datensender 130 (z.B. Knoten) und dem Datenempfänger 110 (z.B. Basisstation) sind die Zeiten vorab bekannt. Alternativ kann auch der Datenempfänger 110 vorab die zufälligen Zeitoffsets dem Datensender 130 mitteilen.

Bei Ausführungsbeispielen kann auf Datensenderseite zu dem zu den definierten Pausenzeiten zwischen bzw. innerhalb der Aussendungen (des Signals 120) eine (zufällige) Pause hinzuaddiert bzw. abgezogen werden. Je nach Szenario kann dies ein konstanter Wert oder ein zeitlich veränderlicher Wert sein.

Unter Betrachtung der in Fig. 1 gezeigten Frequenzstabilität über der Umgebungstemperatur für den Beispielhaft verwendeten Schwingquarz zeigt sich, dass der maximale Fehler unter 15 ppm liegt.

Beträgt die Pause zwischen zwei Aussendungen/ (Teil-)Datenpaketen beispielhaft eine Sekunde, beträgt der maximale Fehler, bei einer Unsicherheit des Quarzes von 15 ppm, 15 µs. Bei einer beispielhaften Symbolrate von 50 kSym/s ergibt sich eine Symboldauer von 20 µs. Um damit eine Temperaturauflösung im Gradbereich zu erhalten, müsste die Schätzgenauigkeit besser als 1 µs sein. Eine 1 µs bei der exemplarischen Symbolrate entspricht 1/15 der Symboldauer. Die Schätzung müsste also bis auf 1/15 Symbol genau sein, was in der Praxis jedoch schwer zu erreichen ist.

Je langsamer die Symbolrate gewählt wird, desto schwieriger ist es die notwendige zeitliche Auflösung zu erreichen.

Wird die Pause entsprechend kurz gewählt, ist keine Verschleierung der Zeit zwischen den Aussendungen notwendig, da die Schätzgenauigkeit nicht ausreichend ist. Je kleiner die vom System verwendete Symbolrate ist, desto länger können die Pausen gewählt werden, die nicht zu verschleiern sind.

Wird die Pause zwischen den Aussendungen hin- und wieder größer, kann für diese einzelnen Zeiten eine Verschleierung wie oben mit (zufälligen) Offsets erfolgen.

Bei Ausführungsbeispielen kann auf Datensenderseite, wenn die Pause zwischen den Aussendungen so klein ist, dass eine hinreichend genaue Schätzung nicht erfolgen kann, keine Verschleierung angewendet werden. Sollte die Pause diese Grenze überschreiten, kann, wie zuvor beschrieben, für diese Zeiten eine Verschleierung erfolgen.

Bei Ausführungsbeispielen kann auf Datensenderseite die Pause zwischen/innerhalb den/der Aussendung(en) so klein gehalten werden, dass eine hinreichend genaue Schätzung nicht erfolgen kann.

Bei Ausführungsbeispielen kann auf Datensenderseite die Verschleierung je nach Szenario an- oder ausgeschaltet werden.

### 1.4 Veränderung (z.B. Verschlechterung) der Frequenzoffsetschätzung

Die am sinnvollsten bzw. einfachsten erscheinende Methode zur Bestimmung der Umgebungsbedingungen am Datensender 130 ist die Schätzung des Frequenzoffsets zwischen dem empfangen Signal und der erwartenden Nominalfrequenz.

Moderne Software Defined Radio Empfänger können die Trägerfrequenz des Empfangenen Signals bis auf wenige Hertz Genauigkeit schätzen. Hierfür gibt es diverse Methoden, die nicht Gegenstand dieser Erfindung sind.

Durch die relativ hohen Trägerfrequenzen im höheren MHz Bereich, haben kleine Einflüsse des Quarzes von wenigen ppm trotzdem einen großen Einfluss auf die Trägerfrequenz. Beispiel: Es wird eine Trägerfrequenz von 800 MHz gewählt. Mit der in Fig. 1 gezeigten Quarzkurve ergibt sich eine maximale Abweichung von 15 ppm, was bei der beispielhaft gewählten Trägerfrequenz von 800 MHz einem maximalen Frequenzoffset von 12 kHz oder 800 Hz/ppm entspricht. Liegt die Genauigkeit der Schätzung beispielhaft bei 10 Hz, kann eine Auflösung von 1/80 ppm erreicht werden, was anhand der in Fig. 1 dargestellten Quarzkurve einer Genauigkeit in Sub-Grad Bereich entspricht.

Wird bei der Übertragung ein Frequenzsprungverfahren (engl. Frequency-Hopping) angewendet, kann alternativ zur Messung der absoluten Frequenz und dem Vergleich mit der Nominalfrequenz, auch die Differenz zwischen zwei Aussendungen / (Teil-)Datenpaketen bestimmt und mit der Kenntnis der erwarteten Differenz daraus die Abweichung ermittelt werden.

Ähnlich wie den vorherigen Verschleierungsmethoden, kann auch hier ein zufälliger Frequenzversatz auf die Aussendungen bzw. die (Teil-)Datenpakete addiert werden. Es kann entweder ein konstanter Offset gewählt oder es wird für jede Aussendung (zufällig) ein neuer Wert ermittelt. Damit ein Angreifer den künstlichen Offset nicht subtrahieren kann, ist es wichtig, dass der Wert nur dem Datensender 130 bekannt ist oder verschlüsselt an den Datenempfänger 110 übertragen wird.

Bei Ausführungsbeispielen kann die Trägerfrequenz der Aussendungen bzw. der (Teil-)Datenpakete mit einem (zufälligen) Frequenzoffset beaufschlagt werden.

Da dem Datenempfänger 110 typischerweise der Frequenzoffset des Datensenders 130 (welcher nach Fig. 1 von der Temperatur am Datensender 130 abhängig ist) nicht bekannt ist, muss der Datenempfänger 110 eine Suche über einen definierten Frequenzsuchbereich durchführen. Dieser Bereich ist normalerweise so ausgelegt, dass die Grenzen durch den maximal zulässigen Quarzversatz definiert sind.

Wird nun ein zusätzlicher Frequenzoffset der Aussendung hinzugefügt, muss sichergestellt werden, dass die Grenzen des Suchbereichs nicht überschritten werden. Beispiel: Der Frequenz-Suchbereich des Empfängers beträgt ± 20 kHz. Durch einen Quarzversatz können Offsets von ± 19 kHz auftreten. Somit verbleiben für den künstlichen (zufälligen) Offset ± 1 kHz Spielraum übrig.

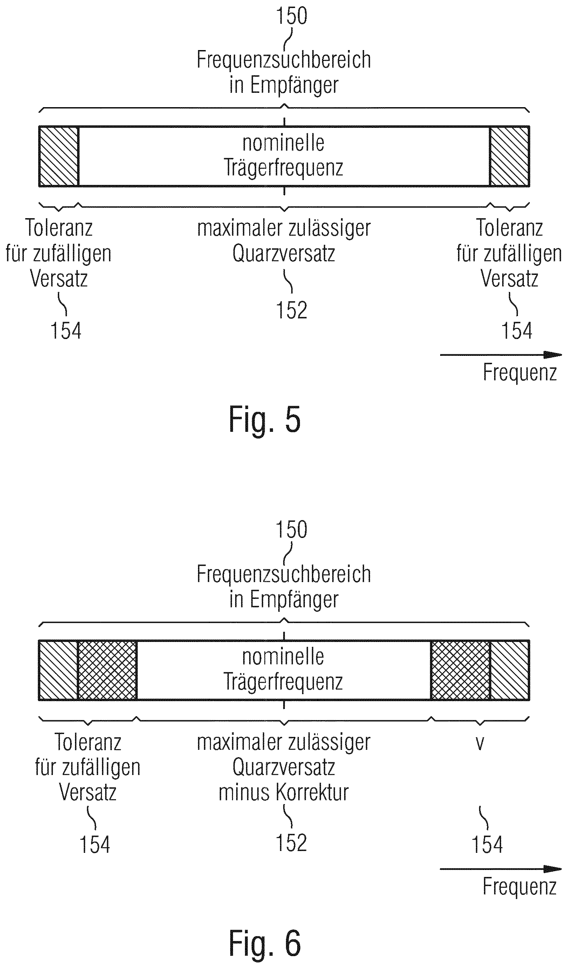

Fig. 5 zeigt eine schematische Ansicht des Frequenzsuchbereichs 150 des Datenempfängers 110, eines maximal zulässigen Frequenzversatzbereichs 152 des Signals 120 (bzw. der Trägerfrequenz (=Signalparameter) des Signals 120), der bedingt durch einen maximalen zulässigen Quarzversatz auftreten kann, sowie eines verbleibenden Bereichs 154 für den Frequenzoffset. Dabei beschreibt die Abszisse die Frequenz. Mit anderen Worten, Fig. 5 zeigt einen Überblick über den Frequenzsuchbereich 150 des Datenempfängers 110 und einem verbleibenden Bereich 154 für künstliche Offsets.

Bei Ausführungsbeispielen kann auf Datensenderseite der (zufällige) künstliche Frequenzversatz abhängig vom Suchbereich 150 des Datenempfängers 110 und dem maximal möglichen Offset des Quarzes gewählt werden.

Wie oben gezeigt, kann der verbleibende Spielraum für den künstlichen Frequenzoffset im Verhältnis zum Quarzoffset sehr klein sein, wodurch sich die Umgebungsbedingungen des Senders nur sehr begrenzt verschleiern lassen.

Sind dem Datensender 130 die Umgebungsbedingungen zumindest teilweise bekannt, kann eine Korrektur der Signaleigenschaften (z.B. durch Anpassung der Trägerfrequenz) erfolgen. Durch diese Korrektur sinkt die Restfehlertoleranz des Oszillators, was einen größeren Bereich für den künstlichen (zufälligen) Frequenzoffset ermöglicht.

Fig. 6 zeigt eine schematische Ansicht des Frequenzsuchbereichs 150 des Datenempfängers 110, eines maximal zulässigen Frequenzversatzbereichs 152 des Signals 120 (bzw. der Trägerfrequenz (=Signalparameter) des Signals 120), der bedingt durch einen maximalen zulässigen Quarzversatz auftreten kann, jeweils vor und nach einer Korrektur eines Einflusses des Umweltparameters 124, sowie eines verbleibenden Bereichs 154 für den Frequenzoffset. Dabei beschreibt die Abszisse die Frequenz. Mit anderen Worten, Fig. 6 zeigt einen Überblick über den Frequenzsuchbereich 150 des Datenempfängers 110 bei vorheriger (teilweiser) Korrektur der Umwelteinflüsse und dem verbleibenden Bereich 154 für künstliche Offsets.

Bei Ausführungsbeispielen kann auf Datensenderseite der Bereich 154 des (zufälligen) künstlichen Frequenzversatzes abhängig vom Suchbereich 150 des Datenempfängers 110 und dem Korrekturfaktor am Datensender 130 bestimmt werden, wobei der Restfehler aus der Subtraktion des maximal möglichen Offsets des Quarzes und des Korrekturfaktors bestimmt wird.

Wird bei der Übertragung ein Frequenzsprungverfahren (engl. Frequency-Hopping) angewendet, kann wie oben beschrieben anstelle der Messung der absoluten Frequenz und dem Vergleich mit der Nominalfrequenz, auch die Differenz zwischen zwei Aussendungen / (Teil-)Datenpaketen bestimmt werden. Aus der Abweichung lässt sich dann wieder auf die Umgebungsbedingungen des Datensenders 130 schließen.

Wird nun ein künstlicher (zufälliger) Frequenzoffset auf die Aussendung(en) bzw. (Teil-)Datenpakete gegeben, verschiebt sich die Empfangsfrequenz und der Angreifer kann aus der absoluten Frequenzlage nicht mehr auf die Umgebungsbedingungen des Datensenders 130 schließen. Durch das Frequenzsprungverfahren (engl. Frequency-Hopping) wird jedoch weiterhin auf mehreren Kanälen gesendet, wobei sich die Differenz zwischen den Kanälen durch den künstlichen Frequenzoffset nicht geändert hat. Der Angreifer hat somit weiterhin die Möglichkeit über die Frequenzdifferenz zwischen den Übertragungskanälen auf die Umgebungsbedingungen des Datensenders 130 zu schließen.

Damit dieses Problem umgangen werden kann, kann bevorzugt ein weiterer künstlicher (zufälliger) Frequenzoffset zwischen den Frequenzsprüngen eingeführt werden. Das heißt, eine der beiden Sendefrequenzen wird mit einem weiteren künstlichen (zufälligen) Frequenzoffset beaufschlagt. Alternativ kann auch beiden Sendefrequenzen ein künstlicher (zufälliger) Frequenzoffset hinzugefügt werden, wobei darauf zu achten ist, dass den beiden Sendefrequenzen nicht der gleiche Offset beaufschlagt wird, bzw. die beiden Offsets unkorreliert sind.

Werden mehr als zwei Aussendungen / (Teil-)Datenpakete vorgenommen, sind entsprechend mehrere verschiedene künstliche (zufällige) Frequenzoffsets notwendig.

Bei Ausführungsbeispielen kann auf Datensenderseite bei Verwendung von mehr als einem Übertragungskanal zusätzlich zur Verschleierung der Trägerfrequenz auch eine Verschleierung der Differenzen zwischen den Aussendungen / (Teil-)Datenpaketen vorgenommen werden.

Bei einigen Systemen wird die Detektion und Synchronisation typischerweise auf Basis von Synchronisationssequenzen in den Aussendungen / (Teil-)Datenpaketen durchgeführt. Um einen besseren Schätzwert zu erhalten, wird teilweise auch eine Kombination über mehrere Aussendungen / (Teil-)Datenpakete angewandt. Diese Kombination setzt jedoch einen bekannten Abstand zwischen den Aussendungen / (Teil-)Datenpaketen voraus. Durch das Aufbringen von künstlichen (zufälligen) Frequenzoffsets zwischen den Aussendungen/(Teil-)Datenpaketen, kann im Datenempfänger keine korrekte kombinierte Detektion und Synchronisation mehr durchgeführt werden.

Um dieses Problem zu umgehen, kann dem Datenempfänger 110 verschlüsselt vorab die Information welche Frequenzoffsets zwischen den Aussendungen / (Teil-)Datenpakete aufgebracht wurden, an den Datenempfänger 110 übermitteln. Diese Frequenzoffsets werden dann bei der Detektion und Synchronisation genutzt. Alternativ können dem Datensender 130 in einer vorherigen Nachricht der/die Frequenzoffsets auch mitgeteilt werden.

Der Angreifer, welcher die vorherige Nachricht nicht entschlüsseln kann, hat keine Information über die verwendeten Frequenzoffsets zwischen den Aussendungen / (Teil-)Datenpaketen und kann somit auch nicht auf die Umgebungsbedingungen des Datensenders 130 zurückschließen.

Die Wahl der Frequenzoffsets kann auch auf Basis eines immanenten Parameters des Systems erfolgen. Dies kann beispielsweise ein Teil- einer vorab versendeten verschlüsselten Nachricht sein. Dies bietet den Vorteil, dass zwischen dem Datenempfänger 110 und dem Datensender 130 keine zusätzliche Information über die Wahl des/der verwendeten Offsets signalisiert/übertragen werden muss.

Bei Ausführungsbeispielen kann dem Datenempfänger 110 vorab eine verschlüsselte Information übermittelt werden, auf dessen Basis der Datenempfänger 110 die vom Datensender 130 verwendeten Frequenzoffsets zwischen den Aussendungen / (Teil-)Datenpaketen ermitteln kann. Diese Frequenzoffsets werden im Anschluss für die Detektion und Synchronisation eingesetzt.

Bei Ausführungsbeispielen kann die Wahl des/der verwendeten Offsets implizit durch einen immanenten Parameter des Systems erfolgen, wobei dieser Parameter beispielsweise ein Teil einer verschlüsselten Nachricht sein kann.

Nachteilig an der Signalisierung der verwendeten Frequenzoffsets ist jedoch, dass der Datenempfänger 110 bei der Detektion für jeden zu empfangenen Datensender 130, eine eigene Detektion mit den verschiedenen Frequenzoffsets durchzuführen ist. Somit wird erheblich mehr Rechenleistung benötigt, was einen höheren Stromverbrauch zur Folge hat und somit die Betriebskosten steigert.

Typischerweise ist die Detektion so ausgelegt, dass sie einen gewissen Grad an Frequenzoffset tolerieren kann. Dies kommt von der Tatsache, dass der Datenempfänger 110 den genauen (Gesamt-)Frequenzoffset der Aussendung / der (Teil-)Datenpakete nicht kennt und somit ermitteln muss. Hierfür gibt es, wie in Fig. 5 gezeigt ist, einen sog. Frequenz-Suchbereich im Datenempfänger 110. Um diesen effizient abzusuchen, ist es von Vorteil, wenn eine hohe Toleranz gegen Frequenzoffsets vorhanden ist. Durch diese Toleranz lässt sich die Anzahl an notwendigen parallelen Detektionen auf Nachbarkanälen reduzieren. Ein typischer Wert für diese Toleranzbreite liegt bei f_{sym}/8 (also 1/8 der Symbolrate). Diese Toleranzbreite kann nun auch für die zufälligen Frequenzoffsets zwischen den Aussendungen / (Teil-)Datenpaketen genutzt werden, um die Umgebungsbedingungen am Datensender 130 zu verschleiern. Es kann der kompletten Aussendung weiterhin ein künstlicher (zufälliger) Frequenzoffset addiert werden, welcher größer als die Toleranzbreite ist, solange der Suchbereich nach Fig. 5 nicht überschritten wird. Innerhalb der Übertragung kann zwischen den Aussendungen / (Teil-) Datenpaketen ein zweiter ein künstlicher (zufälliger) Frequenzoffset addiert werden, der kleiner als die Toleranzbreite der Detektion ist.

Durch die Einschränkung der Variationsbreite des künstlichen (zufälligen) Frequenzoffsets zwischen den Aussendungen / (Teil-)Datenpaketen erfolgt jedoch keine Einschränkung in Sachen der Verschleierung, da bei einer Messung der Frequenzdifferenz ohne Verschleierung zwischen zwei Kanälen nur sehr kleine Abweichungen zu erwarten sind, welche die Toleranzbreite in der Regel bei weitem überschreitet.

Bei Ausführungsbeispielen kann der künstliche (zufällige) Frequenzoffset zwischen den Aussendungen / (Teil-)Datenpaketen kleiner gewählt werden als die Toleranzbreite der Detektion.

Bei Ausführungsbeispielen kann eine Funktion für die Verschleierung definiert werden, die keinen Einfluss auf die Leistungsfähigkeit (engl. performance) hat, wie z.B. eine Sinusfunktion der Verschleierung. Die Frequenzverschleierung ändert sich mit dem Symbol. Die Funktion kann so ausgewählt werden, dass sie keine Leistungseinbußen hat.

Bei der Verschleierung durch zufällige Frequenzoffsets ist zu beachten, dass beim Einsatz von Phasenregelschleifen zur Referenztakterzeugung diskrete Regelfrequenzpunkte vorhanden sein können. In diesem Fall ist es nicht ausreichend durch Oszillatormanipulation die Frequenz auf einen anderen diskreten Regelpunkt in dem Regelpunktraster zu verschieben, da die Lage des Regelpunktrasters an sich bereits Umweltinformationen preisgeben kann.

Der absolute Einfluss bleibt durch das unbekannte Offset verschleiert, relative Änderungen können aber rekonstruierbar sein. Dies ist insbesondere gegeben, wenn die Einflüsse der zu beobachtenden Ereignisse die Abstände der Regelpunkte nicht übersteigen. Aber auch bei stärkeren Einflüssen kann noch eine Erkennung des Ereigniseintritts erfolgen sofern dieses nicht durch eine Überlagerung mit anderen Einflüssen bereits ausreichend verschleiert wird.

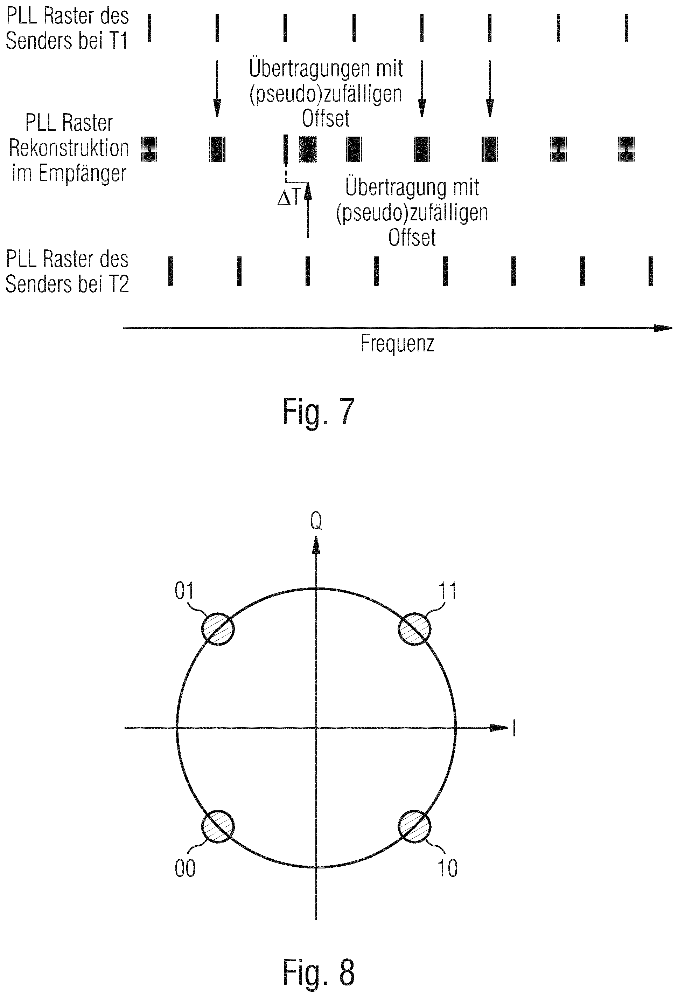

Fig. 7 zeigt eine schematische Ansicht eines PLL Rasters 160_1 des Datensenders 130 zu einem ersten Zeitpunkt mit Umgebungstemperatur T1, des PLL Rasters 160_2 des Datensenders 130 zu einem zweiten Zeitpunkt mit Umgebungstemperatur T2 sowie ein PLL Raster 162 für die Rekonstruktion im Datenempfänger 110, wobei die Übertragungen jeweils mit einem (pseudo)zufälligen Offset erfolgen. Dabei beschreibt die Abszisse die Frequenz. Mit anderen Worten, Fig. 7 zeigt eine Rekonstruktion einer Differenztemperatur zwischen Aussendungen mit zufälligen Frequenzoffsets aus der Lage des PLL Regelpunktrasters.

Die künstliche Verschleierung sollte daher der Phasenregelschleife nachgelagert erfolgen und einen möglichst kontinuierlichen Zufallsraum verwenden. Es ist auch denkbar die Phasenregelschleife für ein Groboffset zu verwenden und die Lage der Regelpunkte durch eine zusätzliche, kleinere zufällige Frequenzverschiebung zu verschleiern.

Bei Ausführungsbeispielen kann auf Datensenderseite der künstliche Offset auch zwischen den diskreten Regelpunkten des PLL Rasters liegen durch zusätzliche Frequenzverschiebung zum Referenztakt.

Bei Ausführungsbeispielen kann auf Datenempfängerseite der Empfänger eine größere Empfangsbreite aufweisen als der durch eine Summe aus Quarztoleranzen und Signalbandbreite entstandene maximale Empfangsoffset. Ein erhöhter Frequenzsuchbereich im Empfänger kann durch eine breitere Frequenzschätzung oder mehrere Empfangskanäle erreicht werden.

Bei Ausführungsbeispielen kann auf Datenempfängerseite die abgearbeitete Bandbreite im Empfänger mindestens z.B. um den Faktor 1,5 größer sein als eine Summe aus Quarztoleranzen und Signalbandbreite.

Bei Ausführungsbeispielen kann auf Datenempfängerseite bei Frequenzsprungsystemen (engl. Frequenz-Hopping) eine Frequenzsynchronisierung per Frequenzsprung erfolgen, z. B. durch sehr schnelles Phasen Tracking.

### 1.5 Veränderung (z.B. Verschlechterung) der Schätzung durch gezielte Phasenoffsets

Ähnlich zu der Toleranzbreite bei der Frequenzschätzung, gibt es auch einen maximal tolerierbaren Phasenoffset bei der Decodierung. Dieser ist in der Regel durch die Art der Modulation gegeben.

Fig. 8 zeigt ein Konstellationsdiagramm einer π/4-Offset QPSK [3].

Die Aufgabe des Empfängers 116 des Datenempfängers 130 ist es unter anderem, aus den empfangenen Symbolen die vermeintlich übertragene Information zurückzugewinnen. Hierfür erfolgt nach der Detektion und Synchronisation eine Entscheidung welche Symbole mutmaßlich übertragen wurden, um daraus die Information zurückzugewinnen. Dies geschieht am Beispiel der in Fig. 8 gezeigten QPSK mittels einer Entscheidung in welchem Quadranten die empfangenen Symbole liegen. Bewegt man sich auf dem Einheitskreis, lässt sich feststellen, dass von den idealen Konstellationspunkten bis zur Grenze der Quadranten ein Phasenoffset von 45° notwendig ist.

Liegt der Phasenoffset somit unter 45° ist weiterhin eine korrekte Decodierung möglich. Durch den Übertragungskanal wird die Phase im Empfänger 116 durch Rauschen, Fading und weitere Effekte manipuliert. Unter speziellen Bedingungen kann jedoch davon ausgegangen werden, dass der maximal auftretende Phasenoffset durch den Kanal geringer als der maximal zulässige Wert ist. Dieser Effekt kann für eine Verschlechterung der Empfangsparameter-Schätzungen genutzt werden, da die Schätzung der Parameter auf Basis der empfangenen Symbole geschieht.

Liegt der maximal mögliche Phasenoffset des Kanals für alle übertragenen Symbole beispielsweise bei 25° bleiben mit der aus Fig. 8 gezeigten Modulation 20° für künstliche (zufällige) Phasenoffsets übrig. Wichtig ist hierbei zu beachten, dass auf allen Symbolen nicht der gleiche Phasenoffset addiert wird, sondern jedes Symbol oder eine Symbolgruppe einen eigenen verschiedenen Phasenoffset erhält. Im Falle, dass alle Symbole den gleichen Offset erhalten, entspricht dies einem Trägerphasenoffset, welcher ohnehin vorhanden ist und vom Empfänger und Angreifer geschätzt und ggf. korrigiert wird.

Durch die Abweichung der Symbole von den erwarteten Konstellationspunkten werden alle Schätzverfahren verschlechtert, welche auf einen Vergleich mit den idealen Konstellationspunkten beruhen. Dies können sowohl sog. Data Aided (dt. datenunterstützte) Verfahren und sog. Non-Data Aided (dt. nicht datenunterstützte) Verfahren sein.

Bei Ausführungsbeispielen kann auf Datensenderseite auf den zu sendenden Symbolen ein künstlicher (zufälliger) Phasenoffset aufgebracht werden, wobei der Phasenoffset für die Symbole unterschiedlich ist.

Typischerweise erfolgt die Schätzung der Trägerphase auf bekannten Pilotsymbolen, wobei für jedes Pilotsymbol der Phasenoffset zum erwarteten Konstellationspunkt berechnet und anschließend eine Mittelung über alle Symbole durchgeführt wird. Durch die Aufbringung der künstlichen (zufälligen) Phasenoffsets wird somit auch die Schätzung der Trägerphase verschlechtert.

Um diese Schätzung nicht zu verschlechtern, ist es möglich, die Summe aller künstlicher (zufälliger) Phasenoffsets über die Mittelungslänge (in der Regel die Länge der Pilotsequenz) so zu wählen, dass sie nahe an Null liegt. Bei einem verbleibenden Offset von Null nach der Mittelung würde der Effekt komplett kompensiert werden.

Bei Ausführungsbeispielen kann auf Datensenderseite die Summe der künstlichen (zufälligen) Phasenoffsets über die Mittelungslänge so gewählt werden, dass sie gegen Null konvergiert.

### 1.6 Veränderung (z.B. Verschlechterung) der Sendeleistung

Bei Ausführungsbeispielen kann die Sendeleistung zufällig geändert werden, z.B. um einen Einfluss eines Umweltparameters auf die Sendeleistung zu reduzieren.

Beispielsweise kann die Sendeleistung zufällig geändert werden damit der Angreifer nicht weiß ob gerade das Fenster offen ist oder nicht. Leistungsregelung würde auch helfen.

### 1.7 Wahl des künstlichen (zufälligen) Offsets

In den zuvor beschriebenen Ausführungsbeispielen zur Verschleierung der einzelnen Signaleigenschaften wurden jeweils ein künstlicher (zufälliger) Offset genutzt. Dieser Offset wird beispielsweise auf das Signal 120 gegeben und somit die eigentlichen Signaleigenschaften verschleiert.

Im Folgenden werden Ausführungsbeispiele der Wahl dieses künstlichen (zufälligen) Offsets beschrieben. Die im Folgenden genannten Beispiele beziehen sich alle auf die Addition eines Frequenzoffsets, wobei diese Methoden für die anderen zu verschleiernden Signaleigenschaften analog gelten.

### 1.7.1 Verschleierung bei konstanten Umgebungsbedingungen

Kann davon ausgegangen werden, dass die Umgebungsbedingungen am Datensender 130 konstant sind (z. B. wenn der Datensender 130 in einem klimatisierten Rechenzentrum ausgebracht wurde), ist es das Ziel diesen konstanten Wert dauerhaft zu verschleiern.

Dies kann durch einen einfachen konstanten (einmalig zufälligen bestimmten) Offset erreicht werden. Würde stattdessen beispielsweise ein mittelwertfreier Zufallsprozess eingesetzt, welcher beispielsweise bei jeder neuen Aussendung einen neuen Wert liefert, könnte der Angreifer durch Mittelwertbildung über mehrere Aussendungen die eigentlichen Umweltbedingungen wieder bestimmen.

Bei Ausführungsbeispielen kann auf Datensenderseite der künstliche (zufällige) Offset konstant sein und nicht über der Zeit variiert werden.

### 1.7.2 Verschleierung bei sich schnell ändernden Umgebungsbedingungen am Datensender

Dieser Fall stellt genau das Gegenteil zum vorherigen Fall dar, bei dem sich die Umgebungsbedingungen so schnell ändern, dass bei (nahezu) jeder Aussendung andere Umgebungsbedingungen am Datensender 130 vorliegen.

In diesem Fall interessieren den Angreifer die Änderungen zwischen den Aussendungen. Bei einem Datensender 130 in einer Wohnung oder einem Haus kann beispielsweise aus den Umgebungsbedingungen darauf geschlossen werden, ob sich jemand in der Wohnung befindet oder nicht.

In diesem Fall würde durch die Addition eines konstanten Offsets, keine Verschleierung erreicht, da die Änderungen nach wie vor messbar wären. Hier muss somit ein sich schnell ändernder (Zufalls-)Prozess gewählt werden, welcher bei (nahezu) jeder Aussendung einen anderen Offset liefert.

**Die Änderungsrate** sollte hierbei gerade ausreichend für die zu verschleiernden Effekte gewählt werden. Eine unnötig häufige Änderung des Offsets liefert einem Angreifer zusätzliche Abtastpunkte, die für eine stochastische Mittelung verwendet werden können. In anderen Worten, idealerweise ist die Änderungsrate des Offsets angepasst an tatsächliche Änderungsfrequenz der zu verschleiernden Einflüsse.

Bei Ausführungsbeispielen kann sich auf Datensenderseite der künstliche (zufällige) Offset mit (nahezu) jeder Aussendung ändern und ist somit zeitvariant.

Bei Ausführungsbeispielen kann auf Datensenderseite der künstliche (zufällige) Offset einer bekannten Verteilung folgen, z.B. einer Gaußverteilung *µ*, *σ.*

Bei Ausführungsbeispielen können auf Datensenderseite die Parameter der Verteilung auch gewürfelt werden.

Bei Ausführungsbeispielen kann auf Datensenderseite der künstliche (zufällige) Offset als Summe aus vielen Verteilungen generiert werden.

### 1.7.3 Verschleierung bei sich langsam ändernden Umgebungsbedingungen am Datensender

Dieser Fall ist normalerweise der typische Fall bei einem Datensender 130. Er beschreibt die Szenarien, in denen sich die Umgebungsbedingungen am Datensender 130 zwar ändern, jedoch nicht so schnell, dass bei jeder (Teilpaket-)Aussendung die Umgebungsbedingungen verschieden (unkorreliert) sind. Mit anderen Worten, die Umgebungsbedingungen bleiben für eine gewisse Anzahl an Aussendungen konstant.

Hierbei ist es nicht zwingend notwendig, dass sich die Umgebungsbedingungen immer nach der gleichen Anzahl an Aussendungen ändern (also regelmäßig). Es kann somit auch eine zeitliche Varianz in der Änderung der Umgebungsbedingungen am Datensender 130 vorliegen.

Um dieses Optimierungs-Problem näher zu analysieren, werden zunächst konstante Umgebungsbedingungen angenommen, wodurch sich die Empfangsfrequenz des Signals am Datenempfänger 1100 nicht ändert. Zur Verschleierung wird ein Zufallsprozess angenommen, welcher bei jeder Aussendung einen neuen Frequenzoffset innerhalb des zulässigen Bereichs liefert. Als Angriff wird nun eine Mittelung über n-Aussendungen durchgeführt. Damit der Angreifer möglichst wenig Information über die Umgebungsbedingungen am Sender durch Mittelung extrahieren kann, sollte auf dem Ergebnis der Mittelung eine möglichst große Unsicherheit vorhanden sein. Mit anderen Worten, es ist eine möglichst große Varianz auf dem Ergebnis der Mittelung erwünscht.

Beispielsweise kann, wie in Abschnitt 1.7.2 beschrieben, ein sich bei (nahezu) jeder Aussendung ändernder Offset eingesetzt werden. Somit hat der Angreifer die Möglichkeit den "wahren" Offset durch einen Mittelwertangriff zu extrahieren, wenn der zu verschleiernde Wert über die Mittelungslänge konstant bleibt.

Um dieses Phänomen genauer zu analysieren, wurde ein Beispiel für eine Verschleierung des Frequenzoffsets simuliert. Hierbei wurde ein gleichverteilter Zufallsprozess eingesetzt, welcher eine Breite von +- 2 kHz besitzt. Das heißt vor jeder Aussendung wird ein Frequenzoffset zufällig ausgewürfelt, der im Bereich von -2 kHz bis 2 kHz liegen kann. Dieser Frequenzoffset wurde auf das Sendesignal moduliert. Die Umweltbedingungen wurden über die Dauer der Mittelung als konstant angenommen.

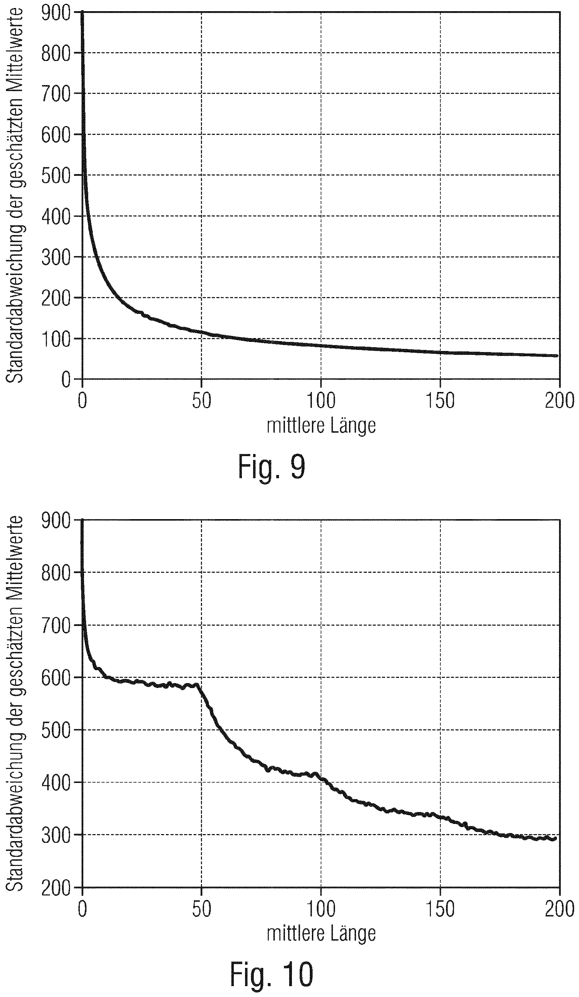

Fig. 9 zeigt in einem Diagramm eine Standardabweichung der Frequenzoffsetschätzung aufgetragen über der Mittelungslänge im Empfänger/Angreifer bei Aufbringung eines zufälligen gleichverteilten Offsets von ±2 kHz auf jede Aussendung. Dabei beschreibt die Ordinate die Standardabweichung der Frequenzoffsetschätzung, wobei die Abszisse die Mittelungslänge beschreibt.

Mit anderen Worten, Fig. 9 zeigt die Standardabweichung der Mittelungsergebnisse im Empfänger/Angreifer bei Einsatz des oben erwähnten Zufallsprozesses. In anderen Worten im Empfänger/Angreifer wird über, die auf der x-Achse angegebene Länge, eine Mittelwertbildung über die Aussendungen durchgeführt und somit ein Mittelwert bestimmt. Dieses Verfahren wird mehrere Male wiederholt und anschließend über alle ermittelten Mittelwerte die Standardabweichung berechnet. Die Standardabweichung gibt, genau wie die Varianz, ein Maß für die Schätzgenauigkeit (und damit indirekt für die Qualität der Verschleierung) an. Fig. 9 setzt eine ideale Frequenzschätzung im Empfänger/Angreifer voraus, was jedoch nicht kritisch ist, da die Abweichung der Frequenzschätzung im Allgemeinen viel geringer als der zu verschleiernde Wert ist.

Wie sich aus Fig. 9 zeigt, lässt sich der Frequenzoffset des Empfängers unter den oben gegeben Parametern für den Zufallsprozess bis zu einer Mittelungslänge von ca. fünf Werten so gut verschleiern, dass die Unsicherheit bei einem Angriff noch zu groß wäre, um einen gezielten Angriff zu fahren.

Im Umkehrschluss bedeutet dies jedoch, dass der Schutz nur bis zu einer Länge von fünf Werten gut funktioniert und somit sich die Umgebungsbedingungen am Datensender 130 spätestens alle fünf Werte ändern muss.

Die zweite Möglichkeit zur Verschleierung wäre ein konstanter Offset auf allen Übertragungen, wie in Abschnitt 1.7.1 genannt. Dies ist jedoch nicht praktikabel, da so nur die Verschleierung des absoluten Wertes und nicht der Änderungen gewährleistet ist.

Um beide Angriffsmöglichkeiten (Absolutwert und Änderung) über längere Mittelungslängen als in Fig. 9 verschleiern zu können, kann eine Kombination aus zwei Offsets (Zufallsprozessen) eingesetzt werden. Wichtig ist dabei, dass die Updateraten der beiden Offsets (Zufallsprozesse) unterschiedlich lang ist. Um eine gute Verschleierung gegen Änderungen zu haben ist es sinnvoll, einen Offset mit jeder Aussendung variieren zu lassen. Der andere Offset kann sich zum Beispiel alle 50 Aussendungen ändern, wie dies in Fig. 10 angenommen wurde. Des Weiteren wurde in Fig. 10 die Variationsbreite der Zufallsprozesse im Vergleich Fig. 9 mit nur einem Zufallsprozess auf ±1 kHz eingeschränkt. In Summe ergibt dies für beide Prozesse kombiniert wieder einen maximalen Offset von ±2 kHz. Beide Szenarien sind somit vergleichbar.

Im Detail zeigt Fig. 10 in einem Diagramm eine Standardabweichung der Frequenzoffsetschätzung aufgetragen über der Mittelungslänge im Empfänger/Angreifer bei Aufbringung zweier zufälliger gleichverteilter Offsets von ±1 kHz auf jede Aussendung, wobei der erste Prozess einen neuen Offset für jede Aussendung liefert und der zweite Offset sich alle 50 Aussendungen ändert. Dabei beschreibt die Ordinate die Standardabweichung der Frequenzoffsetschätzung, wobei die Abszisse die Mittelungslänge beschreibt.

In gleicher Weise zu Fig. 9 zeigt sich in Fig. 10 der schnelle Abfall der Standardabweichung bei kurzen Mittelungslängen. Im Gegensatz zu dem Szenario mit nur einem, sich bei jeder Aussendung sich ändernden, Offset, strebt die Standardabweichung jedoch zunächst gegen einen konstanten Wert, welcher bei gleichen Mittelungslängen deutlich höher liegt als die Kurve mit nur einem Offset.

Wird über mehr Aussendungen als die Updaterate des zweiten Prozesses gemittelt, sinkt die Standardabweichung rasant ab.

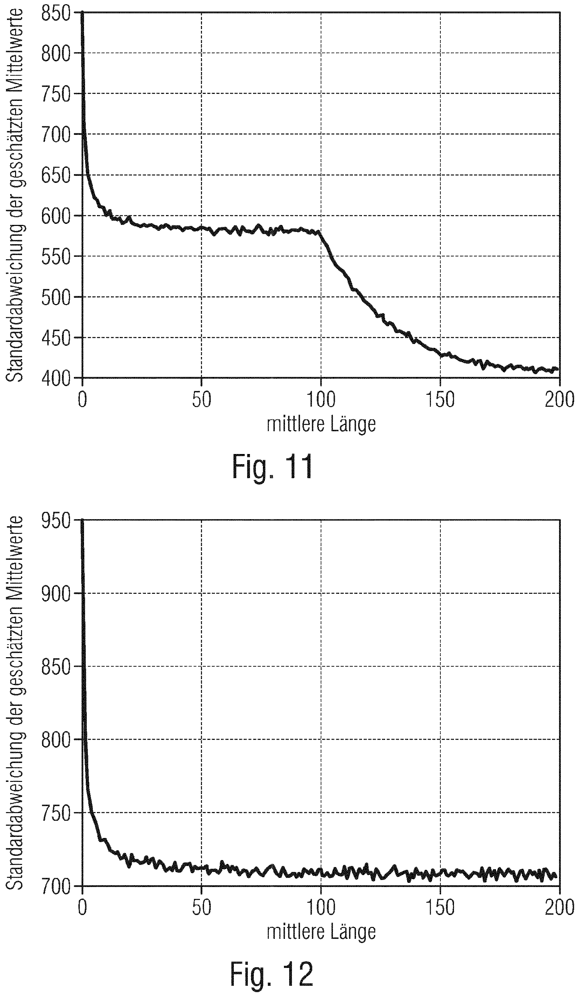

Durch Ausdehnung der Updaterate des zweiten Zufallsprozesses auf z.B. 100 Aussendungen, lässt sich die Annäherung der Standardabweichung gegen die Asymptote noch weiter ausdehnen, was in Fig. 11 zu sehen ist.

Im Detail zeigt Fig. 11 in einem Diagramm eine Standardabweichung der Frequenzoffsetschätzung aufgetragen über der Mittelungslänge im Empfänger/Angreifer bei Aufbringung zweier zufälliger gleichverteilter Offsets von ±1 kHz auf jede Aussendung, wobei der erste Prozess einen neuen Offset für liefert und der zweite Offset sich alle 100 Aussendungen ändert. Dabei beschreibt die Ordinate die Standardabweichung der Frequenzoffsetschätzung, wobei die Abszisse die Mittelungslänge beschreibt.

Bei Ausführungsbeispielen kann der künstliche (zufällige) Offset, welcher auf das Signal gegeben wird, zwei getrennte Offsets (z. B. Zufallszahlen) aufweisen, wobei sich die Updateraten der beiden Offsets unterscheiden (typischerweise hat einer der beiden Offsets eine größere Updaterate).

Es ist nicht, wie oben angenommen, zwingend notwendig, dass der zweite (sich langsam ändernde) Offset für eine gewisse Zeit (Updaterate) konstant ist. Es kann jede beliebige zeitvariante Funktion für den Offset verwendet werden. Beispielsweise kann der zweite Offset durch eine Sinus-Funktion oder eine Dreiecks-Funktion abgebildet werden. In diesem Fall gibt es nur für den ersten Offset eine Updaterate und für den zweiten Offset eine Abbildungsfunktion, welche beispielsweise durch die Frequenz der Sinusschwingung gegeben ist.

Dieser Fall ist in Fig. 12 grafisch veranschaulicht. Aus Gründen der Vergleichbarkeit wurden die Variationsbreiten der beiden Offsets wieder mit ± 1 kHz gewählt, was in Summe eine maximale Abweichung von ±2 kHz ergibt.

Im Detail zeigt Fig. 12 in einem Diagramm eine Standardabweichung der Frequenzoffsetschätzung aufgetragen über der Mittelungslänge im Empfänger/Angreifer bei Aufbringung zweier Offsets von ±1 kHz auf jede Aussendung, wobei der erste Prozess einen neuen Offset für jede Aussendung liefert und der zweite Offset aus einer Sinus-Kurve mit der nominalen Frequenz ω=0.25 besteht. Dabei beschreibt die Ordinate die Standardabweichung der Frequenzoffsetschätzung, wobei die Abszisse die Mittelungslänge beschreibt.

Wie in Fig. 12 zu erkennen ist, nähert sich die Kurve asymptotisch gegen einen Wert an, welcher sich aus den Variationsbreiten der beiden Offsets ergibt. Auch für große Mittelungslängen ist die Standardabweichung noch so groß, dass ein ausreichend genauer Rückschluss auf die Umgebungsbedingungen nicht möglich ist.

Bei Ausführungsbeispielen kann der zweite künstliche Offset aus einer zeitlich veränderlichen Funktion (z. B. einer Sinusfunktion) bestehen. Der Gesamtoffset ergibt sich aus der Überlagerung der beiden (zufälligen) Offsets.

### 2. Empfangsseitige Bestimmung von Umweltparametern eines Datensenders

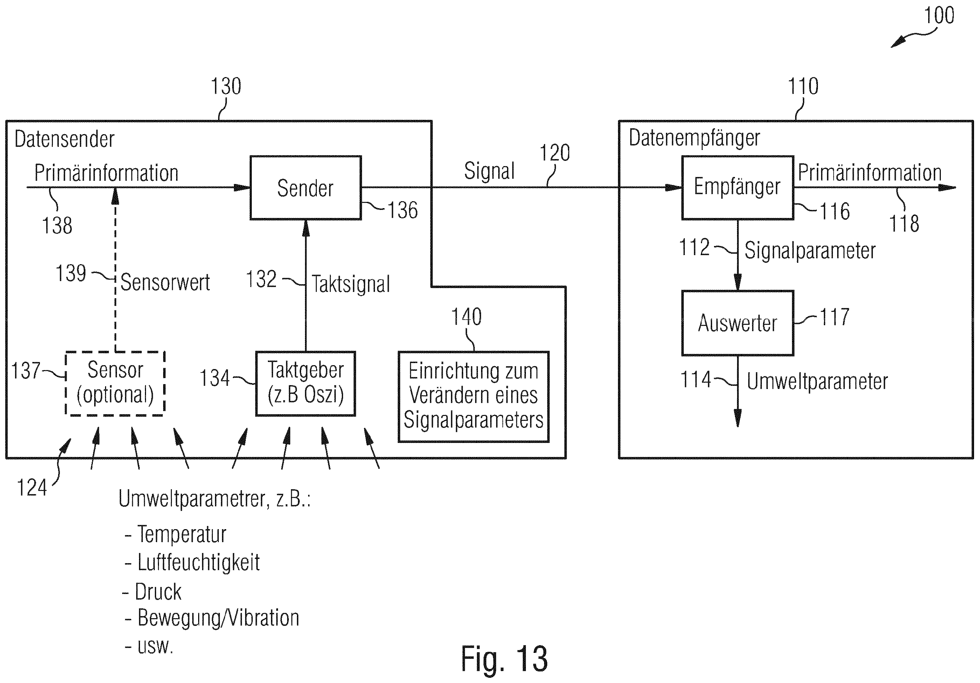

Fig. 13 zeigt ein schematisches Blockschaltbild eines Systems 100 mit einem Datensender 130 und einem Datenempfänger 110, gemäß einem Ausführungsbeispiel der vorliegenden Erfindung.

Der Datenempfänger 110 ist ausgebildet, um ein Signal 120 des Datensenders 130 zu empfangen, wobei das Signal 120 von einem Taktsignal 132 eines Taktgebers 134 (z.B. eines Frequenzgebers, wie z.B. eines Oszillators bzw. Quarzes) des Datensenders 130 abhängig ist. Der Datenempfänger 110 ist ferner ausgebildet, um einen Signalparameter 112 (z.B. eine Signaleigenschaft, wie z.B. eine Trägerfrequenz oder Trägerfrequenzabweichung) des Signals 120 zu ermitteln (z.B. auszuwerten), und um basierend auf dem Signalparameter 112 einen Umweltparameter 114 (z.B. eine Temperatur oder Temperaturänderung) zu ermitteln (z.B. zu schätzen), dem der Taktgeber 134 des Datensenders 110 und/oder dem das Signal 120 ausgesetzt ist.

Wie in Fig. 13 beispielhaft gezeigt ist, kann der Datensender 130 einen Sender 136 (Funkchip / Frontend) aufweisen, der ausgebildet ist, um das Signal 120 (Sendesignal) zu erzeugen, wobei das Signal 120 vom dem Taktsignal 132 des Taktgebers 134 abhängig ist. Beispielsweise kann der Sender 136 mit dem Taktsignal 132 des Taktgebers 134 getaktet sein, so dass das Signal 120 von dem Taktsignal 132 des Taktgebers 134 abhängig ist.

Ein Umweltparameter 124 (z.B. eine Temperatur oder Temperaturänderung), der auf den Taktgeber 134 des Datensenders 130 einwirkt, beeinflusst den Taktgeber 134 und damit zumindest einen Signalparameter (z.B. Frequenz) des von dem Taktgeber 134 bereitgestellten Taktsignals 132. Da das von dem Datensender 130 gesendete Signal 120 von dem Taktsignal 132 abhängig ist, beeinflusst der Umweltparameter 124 nicht nur einen Signalparameter (z.B. Frequenz) des Taktsignals 132, sondern auch einen Signalparameter (z.B. eine Signaleigenschaft, wie z.B. Trägerfrequenz) des von dem Datensender 130 gesendeten Signals 120.

Der Datenempfänger 110 kann somit durch Auswerten des Signalparameters 112 des empfangenen Signals 120 auf den Umweltparameter (z.B. Temperatur) in der Umgebung des Datensenders 130 schließen bzw. diesen schätzen.

Der Signalparameter 112 ist dabei unabhängig von einem Modulationsinhalt des Signals 120, wie z.B. von einer modulierten Primärinformation, die das Signal 120 aufweist.

Beispielweise kann der Datensender 130 (bzw. der Sender 136 des Datensenders 130) ausgebildet sein, um eine Primärinformation 138 (z.B. eine ID (=Identifikator) des Datensenders 130, eine Synchronisationssequenz/Pilotsequenz, Nutzdaten und/oder Dummy-Daten) zu modulieren, so dass das Signal 120 eine modulierte Primärinformation aufweist. Neben der modulierten Primärinformation enthält das Signal 120 jedoch zusätzlich eine Information über den Umweltparameter 124 (in der Umgebung des Datensenders 130) in dem Signalparameter 112, den der Datenempfänger 130 auswerten kann, um auf den Umweltparameter 114 zu schließen.

Wie in Fig. 13 beispielhaft gezeigt ist, kann der Datenempfänger 110 einen Empfänger 116 aufweisen, der ausgebildet ist, um das empfangenen Signal 120 zu demodulieren, um die in dem Signal 120 enthaltene Primärinformation 118 zu erhalten. Ferner kann der Datenempfänger 110 (z.B. der Empfänger 116 des Datenempfängers 110) ausgebildet sein, um den Signalparameter 112 des empfangenen Signals 120 zu ermitteln bzw. auszuwerten, um die in dem Signal 120 zusätzlich enthaltene Information über den Umweltparameter 124 zu erhalten. Beispielsweise kann der Datenempfänger 110 hierzu einen Auswerter 117 (z.B. einen Prozessor) aufweisen, der ausgebildet ist, um basierend auf dem Signalparameter 112 den Umweltparameter 114 zu ermitteln (z.B. zu schätzen), zum Beispiel basierend auf einer Abbildungsfunktion, die den Signalparameter 112 auf den Umweltparameter 114 abbildet.

Bei Ausführungsbeispielen kann der Datensender 130 (bzw. der Sender 136 des Datensenders 130) ausgebildet sein, um als Signal 120 ein digital moduliertes Signal 120 bereitzustellen. Der Datenempfänger 110 kann dabei ausgebildet sein, um einen analogen Signalparameter 112 (z.B. eine analoge Signaleigenschaft, wie z.B. eine Trägerfrequenz) des digital modulierten Signals 120 zu ermitteln, und basierend auf dem analogen Signalparameter 112 den Umweltparameter 114 zu ermitteln. Der analoge Signalparameter 112 ist dabei unabhängig von einem Modulationsinhalt des digital modulierten Signals 120, wie z.B. von einer digital modulierten Primärinformation, die das Signal 120 aufweist.

Bei Ausführungsbeispielen ist es somit möglich, basierend auf dem (analogen) Signalparameter 112 den Umweltparameter in der Umgebung des Datensenders 130 zu schätzen, ohne dass der Umweltparameter hierfür explizit in dem Modulationsinhalt des Signals 120, d.h. in der modulierten Primärinformation des Signals 120, übertragen werden muss.

Obwohl mit dem Signal 120 also primär ganz andere Nutzdaten oder auch nur eine ID des Datensenders und/oder eine Synchronisationssequenz/Pilotsequenz übertragen werden, ist es trotzdem möglich, basierend auf dem (analogen) Signalparameter 112 den Umweltparameter in der Umgebung des Datensenders 130 zu ermitteln.

Die Ermittlung des Umweltparameters in der Umgebung des Datensenders 130 basierend auf dem (analogen) Signalparameter des empfangen Signals 120 schafft ein breites Spektrum von Anwendungsmöglichkeiten.

So kann gem. Ausführungsbeispielen der Datensender 130, wie dies in Fig. 13 beispielhaft angedeutet ist, einen Sensor 137 für einen Umweltparameter 124 aufweisen. Da der Umweltparameter auf Seiten des Datenempfängers 110 auch basierend auf dem (analogen) Signalparameter 112 des Signals 120 ermittelt werden kann, ist es nicht mehr erforderlich den Sensorwert 139 regelmäßig bzw. mit jeder Aussendung des Signals 120 in der modulierten Primärinformation des Signals 120 zu übertragen. Vielmehr genügt es mit dem Signal 120 als modulierte Primärinformation eine Synchronisationssequenz/Pilotsequenz und/oder eine ID des Datensenders 130 oder aber auch nur Dummy-Daten zu übertragen. Hierdurch kann die mit dem Signal 120 übertragene Datenmenge reduziert werden, wodurch auch die zur Übertragung des Signals 120 erforderliche Energie reduziert werden kann, was insbesondere für batteriebetriebenen Datensender 130 von Vorteil ist. Auch muss der Sensor 137 nicht mehr für jede Aussendung des Signals 120 aktiviert werden, wodurch der Energieverbrauch weiter reduziert werden kann. Natürlich kann der von dem Sensor 137 bereitgestellte Sensorwert 139 zusätzlich in einer Aussendung oder einer geringen Anzahl (Teilmenge) von Aussendungen des Signals 120 in der modulierten Primärinformation mit übertragen werden und auf Seiten des Datenempfängers 110 beispielsweise zur Kalibrierung oder Initialisierung genutzt werden. Genauso ist es möglich auf Seiten des Datensenders 130 vollständig auf den Sensor 137 für den Umweltparameter zu verzichten und/oder den Umweltparameter auf Seiten des Datenempfängers 110 ausschließlich basierend auf dem ermittelten Signalparameter 112 des empfangen Signals 120 zu ermitteln.

Ferner ist es durch die Ermittlung des Umweltparameters auf Seiten des Datenempfängers 110 basierend auf dem (analogen) Signalparameter 112 des Signals 120 möglich, einen Datensender 130, der einen Sensor 137 für einen ersten Umweltparameter aufweist, ebenfalls als Sensor für einen zweiten Umweltparameter zu verwenden. Beispielsweise kann gem. Ausführungsbeispielen der Datensender 130 einen Sensor 137 für einen ersten Umweltparameter 124 (z.B. Luftfeuchtigkeit oder Druck) aufweisen, wobei der Datenempfänger 110 ausgebildet ist, um basierend auf dem ermittelten Signalparameter 112 des Signals 120 einen zweiten Umweltparameter (z.B. Temperatur) zu ermitteln, wobei der erste Umweltparameter und der zweite Umweltparameter unterschiedlich sind.

Des Weiteren ist es durch die Ermittlung des Umweltparameters auf Seiten des Datenempfängers 110 basierend auf dem (analogen) Signalparameter 112 des empfangenen Signals 120 möglich, einen Datensender 130 als Sensor für einen Umweltparameter zu verwenden, der keinen Sensor für den Umweltparameter aufweist.

Darüber hinaus ist es möglich einen vorhandenen Datensender 130 als Sensor für einen Umweltparameter (z.B. als Temperatursensor) zu verwenden, obwohl der Datensender 130 an sich nicht als Sensor für den Umweltparameter vorgehsehen ist, beispielsweise da der Datensender 130 über keinen Sensor für den Umweltparameter verfügt oder aber auch weil der Datensender 130 den Sensorwert nicht übertragen kann.

Der Datensender 130 und der Datenempfänger 110 können optional ausgebildet sein, um Daten 120 unter Verwendung des Telegram-Splitting-Verfahrens (dt. Telegrammaufteilungsverfahrens) zu senden bzw. zu empfangen. Hierbei wird ein Telegramm bzw. Datenpaket in eine Mehrzahl von Sub-Datenpakete (oder Teildatenpakete, oder Teilpakete) aufgeteilt und die Sub-Datenpakete entsprechend eines Sprungmusters in der Zeit verteilt und/oder in der Frequenz verteilt von dem Datensender 130 zu dem Datenempfänger 110 übertragen, wobei der Datenempfänger 110 die Sub-Datenpakete wieder zusammenfügt (oder kombiniert), um das Datenpaket zu erhalten. Jedes der Sub-Datenpakete enthält dabei nur einen Teil des Datenpakets. Das Datenpaket kann ferner kanalcodiert sein, so dass zum fehlerfreien Decodieren des Datenpakets nicht alle Sub-Datenpakete sondern nur ein Teil der Sub-Datenpakete erforderlich ist. Die zeitliche Verteilung der Mehrzahl von Sub-Datenpaketen kann entsprechend eines Zeit- und/oder Frequenzsprungmusters erfolgen.

Da der Umweltparameter 124 in der Umgebung des Datensenders 130 jedoch nicht nur von dem Datenempfänger 110 basierend auf dem Signalparameter ermittelt (z.B. geschätzt) werden kann, sondern theoretisch auch von einem anderen Datenempfänger, bei dem es sich potentiell um einen Angreifer handeln kann, umfasst der Datensender 130, wie dies hierin bereits ausführlich beschrieben wurde, eine Einrichtung 140.

Bei Ausführungsbeispielen umfasst der Datensender 130 daher die Einrichtung 140 zum Verändern (z.B. Modifizieren, Verfälschen, Verschleiern oder Verschlechtern) eines Signalparameters (siehe auch Fig. 4), die ausgebildet ist, um zumindest einen Signalparameter (z.B. Modulationsindex, Symbolrate, Sendezeitpunkt, Trägerfrequenz, Phase) des Signals 120 oder einen Parameter (z.B. Taktsignal 132), von dem der Signalparameter des Signals 120 abhängig ist, zu verändern (z.B. modifizieren, verschleiern, verfälschen oder verschlechtern).

Damit der Datenempfänger 110 den Umweltparameter 124 in der Umgebung des Datensenders 130 trotzdem basierend auf dem zumindest einen Signalparameter ermitteln kann, kann der Datenempfänger 110 bei Ausführungsbeispielen ausgebildet sein, um die datensenderseitige Veränderung des Signalparameters vor der Schätzung des Signalparameters oder des Umweltparameters zu kompensieren.

Bei Ausführungsbeispielen kann dem Datenempfänger 110 die datensenderseitige Veränderung des Signalparameters (z.B. der Offset, mit dem der Signalparameter datensenderseitig beaufschlagt ist) bekannt sein.

Bei Ausführungsbeispielen kann der Datenempfänger ausgebildet sein, um die datensenderseitige Veränderung des Signalparameters (z.B. den Offset, mit dem der Signalparameter datensenderseitig beaufschlagt ist) von einem immanenten Parameter des Kommunikationssystems des Datenempfängers oder einer mit dem Signal übertragenen Nachricht abzuleiten.

Bei Ausführungsbeispielen kann der Datenempfänger ausgebildet sein, um die datensenderseitige Veränderung des Signalparameters (z.B. den Offset, mit dem der Signalparameter datensenderseitig beaufschlagt ist) von einem dem Datensender und dem Datenempfänger bekannten kryptografischen Schlüssel abzuleiten.

Im Folgenden werden weitere Ausführungsbeispiele des Datenempfängers 110 und/oder Datensenders 130 näher beschrieben.

### 2.1. Bekannte Einflüsse Abziehen

Manche Systeme verwenden pseudozufällige Abweichungen z.B. im Frequenz- und/oder Zeitbereich. Das würde bei der Schätzung der Umweltparameter (z.B. Temperaturschätzung) zu falschen Ergebnissen führen. Die pseudozufälligen Abweichungen folgen in der Regel allerdings nach einem bekannten Muster. Ist dieser pseudozufällige Offset, welcher durch Würfeln ermittelt wurde (oder die Vorschrift wie er bestimmt wird), dem Datenempfänger 130 (z.B. Basisstation) bekannt, dann kann dieser Wert vom Empfangsparameter abgezogen werden, bevor die Umrechnung in den Umweltparameter erfolgt.

Bei Ausführungsbeispielen können bekannte, künstlich hinzugefügte Änderungen der Signalparameter (Empfangsparameter) rausgerechnet werden, wie z.B. eine pseudozufällige Abweichung der Sendezeiten oder der Frequenzoffsets.

Ferner können absichtliche Verschleierungen, wie oben beschrieben, abgezogen werden. Damit funktioniert die Schätzung der Empfangsparameter genauso, wie wenn die Verschleierungen nicht aufgebracht wären. Voraussetzung hierfür ist jedoch, dass dem Empfänger die Werte der Verschleierung vorliegen.

Bei Ausführungsbeispielen können hardwarespezifische Fehler rausgerechnet (z.B. abgezogen) werden, die z.B. durch die Sendehardware des Knotens hinzugefügt werden.

Bei Ausführungsbeispielen können datensenderspezifische (z.B. knotenspezifische) Daten in dem Datenempfänger 110 (z.B. Basisstation) gespeichert werden.

Bei Ausführungsbeispielen können die absichtlichen Änderungen der Signalparameter in der modulierten Primärinformation, d.h. in den Nutzdaten (engl. payload), des Signals 120 oder mittels eines immanenten Parameters übertragen werden und auf Seiten des Datenempfängers 110 aus der modulierten Primärinformation extrahiert werden (z.B. Klartext, CRC, CMAC).

Oftmals wird bei Aussendungen ein Frequenzsprungverfahren angewandt, um eine bessere Störfestigkeit zu erreichen. Somit sendet der Datensender 130 auf verschiedenen Trägerfrequenzen. Sind dem Datenempfänger 110 vorab nicht die Trägerfrequenzen der jeweiligen Aussendung bekannt, kann der Datenempfänger 110 beispielsweise basierend auf einer Schätzung ermitteln, in welchem Subkanal die Übertragung stattgefunden hat. Falls der Kanalabstand zwischen den Subkanälen größer als der maximale Quarzfehler ist, kann dies durch eine Modulo-Operation erreicht werden.

Um die Frequenzdifferenz unter der Berücksichtigung des gewünschten Kanals zu errechnen, kann bei Ausführungsbeispielen der gewollte Kanal bestimmt werden. Hierfür kann die Frequenz mit der Modulo-Operation durch die Kanalbandbreite dividiert werden. Voraussetzung hierfür ist, dass der Kanalabstand größer ist als der Quarzfehler.

Um die Frequenzdifferenz unter der Berücksichtigung der PLL Auflösungsschrittes zu errechnen, kann bei Ausführungsbeispielen der PLL Auflösungsschritt herausgerechnet werden. Hierfür kann die Frequenz mit der Modulo-Operation durch die PLL Schrittbreite dividiert werden.

Um die Zeitdifferenz unter der Berücksichtigung eines Zeitfehlers, der durch den Sender (z.B. Sendechip) im Datensender 130 bedingt ist, zu berechnen, kann bei Ausführungsbeispielen der Zeitpunkt auch Modulo gerechnet werden, z.B. auf Symboldauer oder Subdatenpaketdauer, oder Telegramdauer, oder Timerauflösung, wobei der Rest der Division den gewünschten Zeitfehler ergibt.

Um die Auflösung der Frequenzschätzung zu erhöhen wird typischerweise eine mehrstufige Synchronisation angewandt, hierbei werden mittels (Teil-)Decodierung die übertragene Daten geschätzt. Diese können im Anschluss mittels Reencodierung für eine verbesserte Frequenzschätzung eingesetzt werden.

Bei Ausführungsbeispielen kann ein Verfahren mit verbesserter Frequenzschätzgenauigkeit verwendet werden. Beispielsweise können decodierte Bits wieder encodiert werden und die Phase/Frequenz (basierend auf den neu encodierten Bits) noch mal genauer geschätzt werden.

### 3. Weitere Ausführungsbeispiele

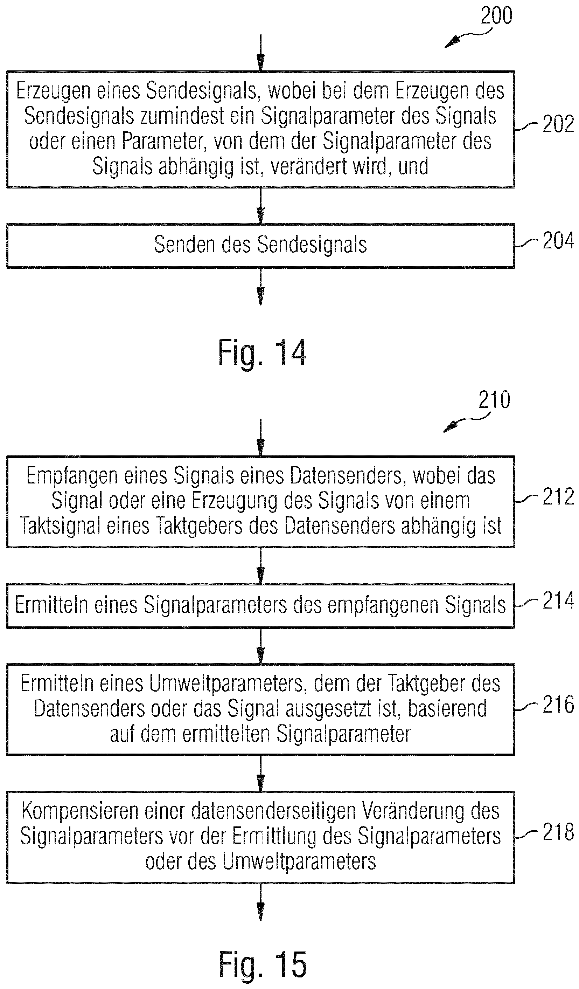

Fig. 14 zeigt ein Flussdiagramm eines Verfahrens 200 zum Senden eines Signals, gemäß einem Ausführungsbeispiel der vorliegenden Erfindung. Das Verfahren 200 umfasst einen Schritt 202 des Erzeugens eines Sendesignals, wobei bei dem Erzeugen des Sendesignals zumindest ein Signalparameter (z.B. Modulationsindex, Symbolrate, Sendezeitpunkt, Trägerfrequenz, Phase) des Signals oder ein Parameter (z.B. Taktsignal), von dem der Signalparameter des Signals abhängig ist, verändert wird. Ferner umfasst das Verfahren 200 einen Schritt 204 des Sendens des Sendesignals.

Fig. 15 zeigt ein Flussdiagramm eines Verfahrens 210 zum Ermitteln eines Umweltparameters in der Umgebung eines Datensenders, gemäß einem Ausführungsbeispiel der vorliegenden Erfindung. Das Verfahren 210 umfasst einen Schritt 212 des Empfangens eines Signals eines Datensenders, wobei das Signal oder eine Erzeugung des Signals von einem Taktsignal eines Taktgebers (z.B. eines Frequenzgebers, wie z.B. Oszillators bzw. Quarzes) des Datensenders abhängig ist. Das Verfahren 210 umfasst ferner einen Schritt 214 des Ermittelns (z.B. Schätzens) eines Signalparameters (z.B. einer Signaleigenschaft) des empfangenen Signals. Das Verfahren 210 umfasst ferner einen Schritt 216 des Ermittelns eines Umweltparameters (z.B. eine Temperatur oder Temperaturänderung), dem der Taktgeber des Datensenders oder das Signal ausgesetzt ist, basierend auf dem ermittelten Signalparameter. Das Verfahren 210 umfasst ferner einen Schritt 218 des Kompensierens einer datensenderseitigen Veränderung des Signalparameters vor der Ermittlung des Signalparameters oder des Umweltparameters.

Wie bereits angedeutet, können bei Ausführungsbeispielen Daten unter Verwendung des Telegram-Splitting-Verfahrens (dt. Telegrammaufteilungsverfahrens) zwischen dem Datensender und dem Datenempfänger übertragen werden. Hierbei wird ein Telegramm bzw. Datenpaket in eine Mehrzahl von Sub-Datenpakete (oder Teildatenpakete, oder Teilpakete) aufgeteilt und die Sub-Datenpakete nicht zusammenhängend (engl. discontigously) von dem Datensender zu dem Datenempfänger übertragen, z.B. entsprechend eines Sprungmusters in der Zeit verteilt und/oder in der Frequenz verteilt, wobei der Datenempfänger die Sub-Datenpakete wieder zusammenfügt (oder kombiniert), um das Datenpaket zu erhalten. Jedes der Sub-Datenpakete enthält dabei nur einen Teil des Datenpakets. Das Datenpaket kann ferner kanalcodiert sein, so dass zum fehlerfreien Decodieren des Datenpakets nicht alle Sub-Datenpakete sondern nur ein Teil der Sub-Datenpakete erforderlich ist. Die zeitliche Verteilung der Mehrzahl von Sub-Datenpaketen kann entsprechend eines Zeit- und/oder Frequenzsprungmusters erfolgen.

Weitere Ausführungsbeispiele schaffen einen Datenempfänger, wobei der Datenempfänger ausgebildet ist, um ein Signal eines Datensenders zu empfangen, wobei das Signal oder eine Erzeugung des Signals von einem Taktsignal eines Taktgebers [z.B. eines Frequenzgebers, wie z.B. Oszillators bzw. Quarzes] des Datensenders abhängig ist, wobei der Datenempfänger ausgebildet ist, um einen Signalparameter [z.B. eine Signaleigenschaft] des Signals zu ermitteln [z.B. auszuwerten], und um basierend auf dem Signalparameter einen Umweltparameter [z.B. eine Temperatur oder Temperaturänderung] zu ermitteln [z.B. zu schätzen], dem der Taktgeber des Datensenders oder das Signal ausgesetzt ist.

Bei Ausführungsbeispielen kann der Signalparameter von einem Modulationsinhalt des Signals unabhängig sein.

Bei Ausführungsbeispielen kann das Signal ein digital moduliertes Signal sein, wobei der Datenempfänger ausgebildet sein kann, um einen analogen Signalparameter [z.B. eine analoge Signaleigenschaft] des digital modulierten Signals zu ermitteln.

Beispielsweise kann der Signalparameter von einem Modulationsinhalt des digital modulierten Signals unabhängig sein.

Bei Ausführungsbeispielen kann der Datenempfänger ausgebildet sein, um für die Ermittlung des Signalparameters bekannte Symbole [z.B. Pilotsymbole] in dem Signal zu verwenden.

Bei Ausführungsbeispielen können die bekannten Symbole in Gruppen aufgeteilt sein, wobei sich die Gruppen von Symbolen an verschiedenen Stellen des Signals [z.B. am Anfang und am Ende] befinden können.

Bei Ausführungsbeispielen kann der Datenempfänger ausgebildet sein, um für die Ermittlung des Signalparameters mindestens 4 bekannte Symbole, vorzugsweise 20 bekannte Symbole und besonders vorzugsweise 40 bekannte Symbole zu verwenden.

Bei Ausführungsbeispielen kann das Signal eine Mehrzahl von Sub-Datenpaketen aufweisen, wobei die bekannten Symbole über mehrere Sub-Datenpakete verteilt sind.

Bei Ausführungsbeispielen kann der Datenempfänger ausgebildet sein, um für die Ermittlung des Signalparameters keine bekannten Symbole zu verwenden.

Bei Ausführungsbeispielen kann das Signal neben einer modulierten Primärinformation [z.B. eine ID des Datensenders, eine Synchronisationssequenz, Nutzdaten und/oder Dummy-Daten] eine Information über den Umweltparameter in dem Signalparameter aufweisen.

Bei Ausführungsbeispielen kann das Signal in gewissen Zeitabständen [z.B. gleichen oder ungleichen Zeitabständen] ausgesendet werden, wobei eine Aussendung des Signals oder eine echte Teilmenge der Aussendungen des Signals zusätzlich eine Information über den Umweltparameter [z.B. eine sensorisch bestimmte Version des Umweltparameters] in der modulierten Primärinformation aufweisen kann, wobei der Datenempfänger ausgebildet sein kann, um die Ermittlung [z.B. Schätzung oder Ableitung] des Umweltparameters basierend auf dem Signalparameter basierend auf der in der modulierten Primärinformation enthaltenen Information über den Umweltparameter zu kalibrieren.

Beispielsweise kann der Datenempfänger ausgebildet sein, um das Signal in einer Mehrzahl von Zeitabschnitten einer Abfolge von Zeitabschnitten zu empfangen, wobei das in einer ersten Teilmenge von Zeitabschnitten der Abfolge von Zeitabschnitten empfangene Signal zusätzlich eine Information über den Umweltparameter [z.B. eine sensorisch bestimmte Version des Umweltparameters] in der modulierten Primärinformation aufweist, wobei der Datenempfänger ausgebildet ist, um die Ermittlung [z.B. Schätzung oder Ableitung] des Umweltparameters basierend auf dem Signalparameter basierend auf der in der modulierten Primärinformation enthaltenen Information über den Umweltparameter zu kalibrieren, wobei das in einer zweiten Teilmenge von Zeitabschnitten der Abfolge von Zeitabschnitten empfangene Signal in der modulierten Primärinformation keine Information über den Umweltparameter enthält, wobei die erste Teilmenge von Zeitabschnitten und die zweite Teilmenge von Zeitabschnitten disjunkt sind.

Bei Ausführungsbeispielen kann die modulierte Primärinformation keine Information über den Umweltparameter enthalten.

Bei Ausführungsbeispielen kann der Datenempfänger ausgebildet sein, um den Umweltparameter basierend auf einer Abbildungsfunktion aus dem Signalparameter zu ermitteln.

Bei Ausführungsbeispielen kann dem Datenempfänger die Abbildungsfunktion bekannt sein.

Bei Ausführungsbeispielen kann der Datenempfänger ausgebildet sein, um die Abbildungsfunktion basierend auf zumindest einer von einem Sensor bestimmten Information über den Umweltparameter zu kalibrieren.

Bei Ausführungsbeispielen kann der Datenempfänger ausgebildet sein, um die Abbildungsfunktion basierend auf zumindest zwei von einem Sensor bestimmten Informationen über den Umweltparameter zu ermitteln.

Bei Ausführungsbeispielen kann der Datenempfänger ausgebildet sein, um die Abbildungsfunktion basierend auf einer Polynomapproximation in Abhängigkeit von den zumindest zwei von dem Sensor bestimmten Informationen über den Umweltparameter zu ermitteln.

Bei Ausführungsbeispielen kann der Datenempfänger ausgebildet sein, um die Abbildungsfunktion basierend auf zumindest einer von einem Sensor bestimmten Information über den Umweltparameter aus einem Satz von Abbildungsfunktionen auszuwählen.

Bei Ausführungsbeispielen kann der Datenempfänger ausgebildet sein, um einen Mittelwert und eine Streuung über zumindest zwei von dem Sensor bestimmten Informationen über den Umweltparameter zu ermitteln, wobei der Datenempfänger ausgebildet sein kann, um die Abbildungsfunktion basierend auf dem Mittelwert und der Streuung aus dem Satz von Abbildungsfunktionen auszuwählen.

Bei Ausführungsbeispielen kann das Signal in gewissen Zeitabständen [z.B. gleichen oder ungleichen Zeitabständen] ausgesendet werden, wobei zumindest eine Aussendung des Signals oder eine echte Teilmenge der Aussendungen des Signals [z.B. in der modulierten Primärinformation] die zumindest eine von dem Sensor bestimmte Information über den Umweltparameter aufweist.

Bei Ausführungsbeispielen kann die Abbildungsfunktion eine Temperaturkurve des Taktgebers des Datensenders sein.

Bei Ausführungsbeispielen kann das Signal in gewissen Zeitabständen [z.B. gleichen oder ungleichen Zeitabständen] ausgesendet werden, wobei der Datenempfänger ausgebildet sein kann, um basierend auf zumindest zwei Aussendungen des Signals zumindest zwei Signalparameter zu ermitteln, wobei der Datenempfänger ausgebildet sein kann, um den Umweltparameter basierend auf den zumindest zwei Signalparametern zu ermitteln.

Bei Ausführungsbeispielen kann der Datenempfänger ausgebildet sein, um die zumindest zwei Signalparameter zu kombinieren [z.B. durch Differenzbildung], um ein kombinierten Signalparameter zu erhalten, wobei der Datenempfänger ausgebildet sein kann, um den Umweltparameter basierend auf dem kombinierten Signalparameter zu ermitteln.

Bei Ausführungsbeispielen kann der Datenempfänger ausgebildet sein, um zumindest zwei Signalparameter [z.B. Frequenz und Modulationsfehler] des Signals zu ermitteln, wobei der Datenempfänger ausgebildet sein kann, um basierend auf den zumindest zwei Signalparametern jeweils einen Umweltparameter [z.B. eine Temperatur oder Temperaturänderung] zu ermitteln [z.B. zu schätzen], dem der Taktgeber des Datensenders oder das Signal ausgesetzt ist.

Beispielsweise kann der Datenempfänger basierend auf den zumindest zwei Signalparametern gleiche Umweltparameter [z.B. Temperaturen oder Temperaturdifferenzen] oder unterschiedliche Umweltparameter [z.B. Temperatur und Druck, oder Temperaturdifferenz und Druckdifferenz] ermitteln.

Bei Ausführungsbeispielen kann der Datenempfänger ausgebildet sein, um die ermittelten Umweltparameter zu kombinieren [z.B. durch Mittelwertbildung], um einen kombinierten Umweltparameter zu erhalten.

Bei Ausführungsbeispielen kann das Signal oder eine Erzeugung des Signals ferner von einem weiteren Taktsignal eines weiteren Taktgebers [z.B. Frequenzgeber und Zeitgeber] des Datensenders abhängig sein, wobei der Datenempfänger ausgebildet sein kann, um zwei Signalparameter des Signals zu ermitteln, und um den Umweltparameter basierend auf den zwei Signalparametern zu ermitteln.

Bei Ausführungsbeispielen kann das Signal in gewissen Zeitabständen [z.B. gleichen oder ungleichen Zeitabständen] ausgesendet werden, wobei zumindest eine Aussendung des Signals oder eine echte Teilmenge der Aussendungen des Signals [z.B. in der modulierten Primärinformation] eine Information über eine Abweichung der zwei Taktgeber des Datensenders aufweist, wobei der Datenempfänger ausgebildet sein kann, um die Ermittlung des Umweltparameters basierend auf der Abweichung der zwei Taktgeber des Datensenders zu kalibrieren.

Beispielsweise kann die Abweichung der zwei Taktgeber des Datensenders die aktuelle Differenz der Frequenzen der zwei Taktgeber angegeben. Zum Beispiel können die beiden Taktgeber [z.B. Quarze] gegeneinander vermessen werden, um einen Wert [z.B. in ppm, wie z.B. 20 ppm] festzustellen, der angibt, um wieviel die beiden Taktgeber auseinanderlaufen. Der Wert kann mitgesendet werden. Der Datenempfänger [z.B. Basisstation] kann die Zeit [Empfangszeitpunkt] und Frequenz [Empfangsfrequenz] schätzen und die Information, um die Quarztemperaturkurven des Zeitquarzes oder des Frequenzquarzes am Knoten zu bestimmen/kalibrieren.

Bei Ausführungsbeispielen kann der Datenempfänger ausgebildet sein, um ein weiteres Signal von einem weiteren Datensender zu empfangen, wobei das weitere Signal oder eine Erzeugung des weiteren Signals von einem Taktsignal eines Taktgebers des weiteren Datensenders abhängig ist, wobei der Datensender und der weitere Datensender im Wesentlichen dem gleichem Umweltparameter ausgesetzt sind [z.B. im gleichen Raum angeordnet sind], wobei der Datenempfänger ausgebildet sein kann, um einen weiteren Signalparameter des weiteren Signals zu ermitteln, und um den Umweltparameter basierend auf dem Signalparameter und dem weiteren Signalparameter zu ermitteln.

Bei Ausführungsbeispielen kann der Datenempfänger ausgebildet sein, um den Signalparameter und den weiteren Signalparameter zu kombinieren, um einen kombinierten Signalparameter zu erhalten, und um den Umweltparameter basierend auf dem kombinierten Signalparameter zu ermitteln.

Bei Ausführungsbeispielen können der Signalparameter und der weitere Signalparameter einzeln die Ermittlung eines relativen Umweltparameters [z.B. Temperaturänderungen] ermöglichen, wobei der Datenempfänger ausgebildet sein kann, um basierend auf dem Signalparameter und dem weiteren Signalparameter in Kombination einen absoluten Umweltparameter zu ermitteln.

Bei Ausführungsbeispielen können der Datensender und der weitere Datensender unterschiedlichen Funksystemen angehörig sein [z.B. Datensender unterschiedlicher Funksysteme sind].

Bei Ausführungsbeispielen kann das Taktsignal des Taktgebers von dem Umweltparameter abhängig sein.

Bei Ausführungsbeispielen kann der Datenempfänger ausgebildet sein, um einen altersbedingten Einfluss des Taktgebers auf den Signalparameter zu kompensieren.

Beispielsweise kann dem Datenempfänger der altersbedingte Einfluss des Taktgebers auf den Signalparameter bekannt sein. Ferner oder alternativ kann der Datenempfänger ausgebildet sein, um den altersbedingten Einfluss des Taktgebers auf den Signalparameter zu ermitteln bzw. zu schätzen, z.B. basierend auf zumindest zwei aufeinanderfolgenden empfangen Signalen des Datensenders.

Bei Ausführungsbeispielen kann der Datenempfänger ausgebildet sein, um einen exemplarstreuungsbedingten Einfluss des Taktgebers auf den Signalparameter zu kompensieren.

Bei Ausführungsbeispielen kann der Signalparameter
- eine Empfangsträgerfrequenz,
- ein Empfangszeitpunkt,
- eine Empfangssymbolrate,
- ein Empfangsmodulationsindex,
- eine Dopplerfrequenz,
- ein Signal- zu Rauschverhältnis,
- eine Signalleistung,
- eine Kanalphase,
- eine Kanaldämpfung,
- eine Kanaldispersion und/oder
- eine Polarisationsdrehung
oder eine Änderung derselben bzw. desselben sein.

Bei Ausführungsbeispielen kann der Umweltparameter
- eine Temperatur,
- eine Luftfeuchtigkeit,
- ein Atmosphärendruck,
- eine elektromagnetische Strahlung,
- eine Helligkeit,
- eine Bewegung und/oder
- eine Vibration
oder eine Änderung derselben bzw. desselben ist.

Weitere Ausführungsbeispiele schaffen ein System mit einem Datenempfänger gemäß einem der hierin beschriebenen Ausführungsbeispiele und einem Datensender, wobei der Datensender ausgebildet sein kann, um das Signal zu senden, wobei das Signal oder die Erzeugung des Signals von dem Taktsignal des Taktgebers des Datensenders abhängig ist.

Bei Ausführungsbeispielen kann der Datensender ausgebildet sein, um das Signal in gewissen Zeitabständen [z.B. gleichen oder ungleichen Zeitabständen] zu senden, wobei der Datensender ausgebildet sein kann, um zumindest eine Aussendung des Signals oder eine echte Teilmenge der Aussendungen des Signals mit einer von einem Sensor bestimmten Information über den Umweltparameter zu versehen.

Weitere Ausführungsbeispiele schaffen ein Verfahren. Das Verfahren umfasst einen Schritt des Empfangens eines Signals eines Datensenders, wobei das Signal oder eine Erzeugung des Signals von einem Taktsignal eines Taktgebers [z.B. eines Frequenzgebers, wie z.B. Oszillators bzw. Quarzes] des Datensenders abhängig ist. Das Verfahren umfasst ferner einen Schritt des Ermittelns [z.B. Schätzens] eines Signalparameters [z.B. eine Signaleigenschaft] des empfangenen Signals. Das Verfahren umfasst ferner einen Schritt des Ermittelns eines Umweltparameters [z.B. eine Temperatur oder Temperaturänderung], dem der Taktgeber des Datensenders oder das Signal ausgesetzt ist, basierend auf dem ermittelten Signalparameter.

Bei Ausführungsbeispielen kann ein Einfluss der Umwelt auf den Taktgeber des Datensenders mindestens um den Faktor zwei oder bevorzugt um den Faktor vier größer sein als ein Einfluss der Umwelt auf einen Taktgeber eines Datenempfängers, der das Signal des Datensenders empfängt.

Bei Ausführungsbeispielen kann ein Einfluss der Umwelt auf einen Taktgeber eines Datenempfängers, der das Signals des Datensenders empfängt, mindestens um den Faktor zwei oder bevorzugt um den Faktor vier größer sein als ein Einfluss der Umwelt auf den Taktgeber des Datensenders.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparats), wie zum Beispiel einen Mikroprozessor, einen programmierbaren Computer oder eine elektronische Schaltung ausgeführt werden. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist. Der Datenträger, das digitale Speichermedium oder das computerlesbare Medium sind typischerweise gegenständlich und/oder nichtvergänglich bzw. nichtvorübergehend.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die hierin beschriebenen Vorrichtungen können beispielsweise unter Verwendung eines Hardware-Apparats, oder unter Verwendung eines Computers, oder unter Verwendung einer Kombination eines Hardware-Apparats und eines Computers implementiert werden.

Die hierin beschriebenen Vorrichtungen, oder jedwede Komponenten der hierin beschriebenen Vorrichtungen können zumindest teilweise in Hardware und/oder in Software (Computerprogramm) implementiert sein.

Die hierin beschriebenen Verfahren können beispielsweise unter Verwendung eines Hardware-Apparats, oder unter Verwendung eines Computers, oder unter Verwendung einer Kombination eines Hardware-Apparats und eines Computers implementiert werden.

Die hierin beschriebenen Verfahren, oder jedwede Komponenten der hierin beschriebenen Verfahren können zumindest teilweise durch Hardware und/oder durch Software ausgeführt werden.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Datensender (130), mit folgenden Merkmalen:
einer Sendeeinrichtung (136), die ausgebildet ist, um ein Signal (120) zu senden, wobei zumindest ein Signalparameter des Signals (120) von zumindest einem Umweltparameter (124) in einer Umgebung des Datensenders (130) abhängig ist, und einer Einrichtung (140) zum Verschlechtern oder Verfälschen des Signalparameters, die ausgebildet ist, um den zumindest einen Signalparameter des Signals (120) oder einen Parameter, von dem der zumindest eine Signalparameter des Signals abhängig ist, zu verschlechtern oder verfälschen,
charakterisiert dadurch, dass die Einrichtung (140) zum Verschlechtern oder Verfälschen des Signalparameters ausgebildet ist, um den zumindest einen Signalparameter, der von dem zumindest einen Umweltparameter (124) abhängig ist, zusätzlich mit einem Offset zu beaufschlagen, um den zumindest einen Signalparameter zu verschlechtern oder verfälschen,
wobei der Offset ein zufälliger oder pseudozufälliger Offset ist.

2. Datensender (130) nach dem vorangehenden Anspruch,
wobei der zumindest eine Signalparameter zumindest zwei Signalparameter sind,
wobei die Einrichtung (140) zum Verschlechtern oder Verfälschen des Signalparameters ausgebildet ist, um die zumindest zwei Signalparameter jeweils mit dem Offset zu beaufschlagen, um die zumindest zwei Signalparameter zu verschlechtern oder verfälschen.

3. Datensender (130) nach einem der Ansprüche 1 bis 2,
wobei der Offset entweder ein konstanter Offset oder ein zeitlich veränderlicher Offset ist.

4. Datensender (130) nach einem der Ansprüche 1 bis 3,
wobei der Offset zwei Offsetkomponenten aufweist, die sich über die Zeit unterschiedlich ändern.

5. Datensender (130) nach einem der Ansprüche 1 bis 3,
wobei der Offset zwei Offsetkomponenten aufweist,
wobei eine erste Offsetkomponente der zwei Offsetkomponenten einen konstante Offsetkomponente ist, und wobei eine zweite Offsetkomponente der zwei Offsetkomponenten eine zeitlich veränderliche Offsetkomponente ist.

6. Datensender (130) nach einem der Ansprüche 1 bis 3,
wobei der Offset zwei Offsetkomponenten aufweist,
wobei eine erste Offsetkomponente der zwei Offsetkomponenten auf einer zeitlich veränderlichen Funktion basiert,
und wobei eine zweite Offsetkomponente der zwei Offsetkomponenten auf einem zufälligen oder pseudozufälligen Prozess basiert.

7. Datensender (130) nach einem der Ansprüche 1 bis 6,
wobei der Datensender (130) ausgebildet ist, um den Offset von einem immanenten Parameter eines Kommunikationssystems (100) des Datensenders (130) oder einer mit dem Signal (120) zu übertragenen Nachricht abzuleiten.

8. Datensender (130) nach einem der Ansprüche 1 bis 6,
wobei der Datensender (130) ausgebildet ist, um mit dem Signal (120) oder einem weiteren Signal eine verschlüsselte Information über den Offset zu übertragen.

9. Datensender (130) nach einem der Ansprüche 1 bis 6,
wobei der Datensender (130) ausgebildet ist, um den Offset aus einem dem Datensender (130) und einem Datenempfänger bekannten kryptografischen Schlüssel oder Schlüsselpaar abzuleiten.

10. Datensender (130) nach einem der vorangehenden Ansprüche,
wobei der Datensender (130) ausgebildet ist, um den Signalparameter mit einem von dem Umweltparameter (124) in der Umgebung des Datensenders (130) abhängigen Korrekturfaktor zu beaufschlagen, um einen korrigierten Signalparameter zu erhalten,
wobei die Einrichtung (140) zum Verschlechtern oder Verfälschen des Signalparameters ausgebildet ist, um den korrigierten Signalparameter zu verschlechtern oder verfälschen.

11. Datensender (130) nach einem der Ansprüche 1 bis 10,
wobei der Signalparameter eine Trägerfrequenz oder eine Änderung derselben ist,
wobei der Offset ein Frequenzoffset ist.

12. Datensender (130) nach Anspruch 11,
wobei die Einrichtung (140) zum Verschlechtern oder Verfälschen des Signalparameters ausgebildet ist, um die Trägerfrequenz mit einem zufälligen Frequenzoffset zu beaufschlagen.

13. Datensender (130) nach einem der Ansprüche 11 bis 12,
wobei die Einrichtung (140) zum Verschlechtern oder Verfälschen des Signalparameters ausgebildet ist, um den Frequenzoffset in Abhängigkeit von einem maximal möglichen Offset eines Taktgebers (134) des Datensenders (130) und eines empfängerseitigen Suchbereichs (150) zu wählen.

14. Datensender (130) nach einem der Ansprüche 11 bis 13,
wobei der Datensender (130) ausgebildet ist, um die Trägerfrequenz mit einem von dem Umweltparameter (124) in der Umgebung des Datensenders (130) abhängigen Korrekturfaktor zu beaufschlagen, um einen Einfluss des Umweltparameters (124) auf die Trägerfrequenz zu korrigieren,
wobei die Einrichtung (140) zum Verschlechtern oder Verfälschen des Signalparameters ausgebildet ist, um den Frequenzoffset in Abhängigkeit von einem empfängerseitigen Suchbereich (150) und dem Korrekturfaktor zu wählen.

15. Datensender (130) nach einem der Ansprüche 11 bis 14,
wobei der Datensender (130) ausgebildet ist, um das Signal (120) basierend auf einem Frequenzsprungverfahren unter Verwendung von einer Mehrzahl von Trägerfrequenzen senden,
wobei die Einrichtung (140) zum Verschlechtern oder Verfälschen des Signalparameters ausgebildet ist, um zumindest zwei der Mehrzahl von Trägerfrequenzen mit unterschiedlichen Frequenzoffsets zu beaufschlagen.

16. Datensender (130) nach Anspruch 15,
wobei die Frequenzoffsets kleiner sind als eine empfängerseitige Toleranzbreite einer Detektion.

17. Datensender (130) nach Anspruch 16,
wobei die Toleranzbreite kleiner ist als ¼ der Symbolrate.

18. Datensender (130) nach einem der Ansprüche 11 bis 17,
wobei zumindest einer der Frequenzoffsets zwischen diskreten Regelpunkten eines PLL Rasters eines Taktgebers (134) des Datensenders (130) oder vielfachen davon liegen.

19. Datensender (130) nach einem der Ansprüche 11 bis 18,
wobei das Signal (120) eine verschlüsselte Information über die unterschiedlichen Frequenzoffsets aufweist.

20. Datensender (130) nach einem der Ansprüche 11 bis 18,
wobei der Datensender (130) ausgebildet ist, um die unterschiedlichen Frequenzoffsets basierend auf einem immanenten Parameter eines Kommunikationssystems (100) des Datensenders (130) oder basierend auf einem Teil der mit dem Signal (120) zu übertragenen Nachricht zu ermitteln.

21. Datensender (130) nach einem der vorangehenden Ansprüche,
wobei der Umweltparameter
- eine Temperatur,
- eine Luftfeuchtigkeit,
- ein Atmosphärendruck,
- eine elektromagnetische Strahlung,
- eine Helligkeit,
- eine Bewegung und/oder
- eine Vibration
oder eine Änderung derselben bzw. desselben ist.

22. Datensender (130) nach einem der vorangehenden Ansprüche,
wobei der Datensender (130) ausgebildet ist, um in Abhängigkeit von einer Telegrammlänge oder Sub-Datenpaketlänge oder einer Anzahl an codierten Bits die Veränderung des Signalparameters adaptiv anzupassen.

23. Datensender (130) nach einem der vorangehenden Ansprüche,
wobei der Datensender (130) ausgebildet ist, um zwei Signalparameter des Signals (120) mit Offsets zu beaufschlagen, wobei sich die Offsets der zwei Signalparameter zumindest teilweise gegenseitig kompensieren.

24. Datensender (130) nach einem der vorangehenden Ansprüche,
wobei dem Datensender (130) Empfangsgrenzen eines Datenempfängers (110), der das Signal (120) empfängt, bekannt sind,
wobei der Datensender (130) ausgebildet ist, um den Signalparameter unter Berücksichtigung der Empfangsgrenzen zu verschlechtern oder verfälschen.

25. System, mit folgenden Merkmalen:
einem Datensender (130) nach einem der Ansprüche 1 bis 24, und
einem Datenempfänger (110), wobei der Datenempfänger (110) ausgebildet ist, um ein Signal (120) zu empfangen, wobei zumindest ein Signalparameter des Signals (120) verändert ist.

26. System nach Anspruch 25,
wobei der Datenempfänger (110) ausgebildet ist, um ein Signal (120) eines Datensenders (130) zu empfangen, wobei das Signal (120) oder eine Erzeugung des Signals (120) von einem Taktsignal (132) eines Taktgebers (134) des Datensenders (130) abhängig ist,
wobei der Datenempfänger (110) ausgebildet ist, um einen Signalparameter des Signals (120) zu ermitteln, und um basierend auf dem Signalparameter einen Umweltparameter (114) zu ermitteln, dem der Taktgeber des Datensenders (130) oder das Signal (120) ausgesetzt ist,
wobei der Datensender (110) ausgebildet ist, um eine datensenderseitige Verschlechterung oder Verfälschung des Signalparameters vor der Schätzung des Signalparameters oder des Umweltparameters zu kompensieren.

27. Verfahren (200), mit folgenden Schritten:
Erzeugen (202) eines Sendesignals (120), wobei zumindest ein Signalparameter des Sendesignals (120) von zumindest einem Umweltparameter (124) in einer Umgebung des Datensenders (130) abhängig ist, wobei bei dem Erzeugen des Sendesignals (120) der zumindest eine Signalparameter des Sendesignals (120) oder ein Parameter eines Signals, von dem der zumindest eine Signalparameter des Sendesignals (120) abhängig ist, verändert wird, und
Senden (204) des Sendesignals (120),
charakterisiert dadurch, dass bei dem Erzeugen des Sendesignals (120) der zumindest eine Signalparameter, der von dem der von dem zumindest einen Umweltparameter (124) abhängig ist, zusätzlich mit einem Offset beaufschlagt wird, um den zumindest einen Signalparameter zu verschlechtern oder verfälschen,
wobei der Offset ein zufälliger oder pseudozufälliger Offset ist.

28. Computerprogramm zur Durchführung des Verfahrens nach Anspruch 27, wenn das Computerprogramm auf einem Computer oder Mikroprozessor abläuft.

## Claims

1. Data transmitter (130), comprising:
a transmitter (136) configured to transmit a signal (120), wherein at least one signal parameter of the signal (120) depends on at least one environmental parameter (124) in an environment of the data transmitter (130), and
a means (140) for deteriorating or corrupting the signal parameter configured to deteriorate or corrupt the at least one signal parameter of the signal (120) or a parameter depending on the at least one signal parameter of the signal,
**characterized in that** the means (140) for deteriorating or corrupting the signal parameter is configured to additionally provide the at least one signal parameter depending on the at least one environmental parameter (124) with an offset in order to deteriorate or corrupt the at least one signal parameter,
wherein the offset is a random or pseudo-random offset.

2. Data transmitter (130) according to the preceding claim,
wherein the at least one signal parameter is at least two signal parameters,
wherein the means (140) for deteriorating or corrupting the signal parameter is configured to provide the at least two signal parameters with an offset each in order to deteriorate or corrupt the at least two signal parameters.

3. Data transmitter (130) according to any one of claims 1 to 2,
wherein the offset is a constant offset and/or a time-varying offset.

4. Data transmitter (130) according to any one of claims 1 to 3,
wherein the offset comprises two offset components changing differently over time.

5. Data transmitter (130) according to any one of claims 1 to 3,
wherein the offset comprises two offset components,
wherein a first offset component of the two offset components is a constant offset component, and wherein a second offset component of the two offset components is a time-varying offset component.

6. Data transmitter (130) according to any one of claims 1 to 3,
wherein the offset comprises two offset components,
wherein a first offset component of the two offset components is based on a time-varying function,
and wherein a second offset component of the two offset components is based on a random or pseudo-random process.

7. Data transmitter (130) according to any one of claims 1 to 6,
wherein the data transmitter (130) is configured to derive the offset from an immanent parameter of a communication system (100) of the data transmitter (130) or a message to be transmitted with the signal (120).

8. Data transmitter (130) according to any one of claims 1 to 6,
wherein the data transmitter (130) is configured to transmit encrypted information on the offset with the signal (120) or a further signal.

9. Data transmitter (130) according to any one of claims 1 to 6,
wherein the data transmitter is configured to derive the offset from a cryptographic key or pair of keys known to the data transmitter and a data receiver.

10. Data transmitter (130) according to any one of the preceding claims,
wherein the data transmitter (130) is configured to provide the signal parameter with a correction factor depending on the environmental parameter (124) in the environment of the data transmitter (130) to acquire a corrected signal parameter,
wherein the means (140) for deteriorating or corrupting the signal parameter is configured to deteriorate or corrupt the corrected signal parameter.

11. Data transmitter (130) according to any one of claims 1 to 10,
wherein the signal parameter is a carrier frequency or a change of the same,
wherein the offset is a frequency offset.

12. Data transmitter (130) according to claim 11,
wherein the means (140) for deteriorating or corrupting the signal parameter is configured to provide the carrier frequency with a random frequency offset.

13. Data transmitter (130) according to any one of claims 11 to 12,
wherein the means (140) for deteriorating or corrupting the signal parameter is configured to select the frequency offset in dependence on a maximum possible offset of a clock generator (134) of the data transmitter (130) and a receiver-side search range (150).

14. Data transmitter (130) according to any one of claims 11 to 13,
wherein the data transmitter (130) is configured to provide the carrier frequency with a correction factor depending on the environmental parameter (124) in the environment of the data transmitter (130) in order to correct an influence of the environmental parameter (124) on the carrier frequency,
wherein the means (140) for deteriorating or corrupting the signal parameter is configured to select the frequency offset in dependence on a receiver-side search range (150) and the correction factor.

15. Data transmitter (130) according to any one of claims 11 to 14,
wherein the data transmitter (130) is configured to transmit the signal (120) based on a frequency hopping method using a plurality of carrier frequencies,
wherein the means (140) for deteriorating or corrupting the signal parameter is configured to provide at least two of the plurality of carrier frequencies with different frequency offsets.

16. Data transmitter (130) according to claim 15,
wherein the frequency offsets are smaller than a receiver-side tolerance width of a detection.

17. Data transmitter (130) according to claim 16,
wherein the tolerance width is less than ¼ of the symbol rate.

18. Data transmitter (130) according to any one of claims 11 to 17,
wherein at least one of the frequency offsets lies between discrete regulation points of a PLL raster of a clock generator (134) of the data transmitter (130) or multiples thereof.

19. Data transmitter (130) according to any one of claims 11 to 18,
wherein the signal (120) comprises encrypted information on the different frequency offsets.

20. Data transmitter (130) according to any one of claims 11 to 18,
wherein the data transmitter (130) is configured to determine the different frequency offsets based on an immanent parameter of a communication system (100) of the data transmitter (130) or based on a part of the message to be transmitted with the signal (120).

21. Data transmitter (130) according to any one of the preceding claims,
wherein the environmental parameter is
- a temperature,
- a humidity,
- an atmospheric pressure,
- an electromagnetic radiation,
- a brightness,
- a movement and/or
- a vibration
or a change of the same.

22. Data transmitter (130) according to any one of the preceding claims,
wherein the data transmitter (130) is configured to adaptively adapt the change of the signal parameter in dependence on a telegram length or sub-data packet length or a number of coded bits.

23. Data transmitter (130) according to any one of the preceding claims,
wherein the data transmitter (130) is configured to provide two signal parameters of the signal (120) with offsets, wherein the offsets of the two signal parameters at least partly compensate each other.

24. Data transmitter (130) according to any one of the preceding claims,
wherein the data transmitter (130) knows receiving limits of a data receiver (110) receiving the signal (120),
wherein the data transmitter (130) is configured to deteriorate or corrupt the signal parameter taking into account the receiving limits.

25. System, comprising:
a data transmitter (130) according to any one of claims 1 to 24, and
a data receiver (110), wherein the data receiver (110) is configured to receive a signal (120), wherein at least one signal parameter of the signal (120) is changed.

26. System according to claim 25,
wherein the data receiver (110) is configured to receive a signal (120) of a data transmitter (130), wherein the signal (120) or a generation of the signal depends on a clock signal (132) of a clock generator (134) of the data transmitter (130),
wherein the data receiver (110) is configured to determine a signal parameter of the signal (120) and to determine, based on the signal parameter, an environmental parameter (114) to which the clock generator of the data transmitter (130) or the signal (120) is exposed,
wherein the data transmitter (110) is configured to compensate a data transmitterside deterioration or corruption of the signal parameter prior to estimating the signal parameter or the environmental parameter.

27. Method (200), comprising:
generating (202) a transmit signal (120), wherein at least one signal parameter of the transmit signal (120) depends on at least one environmental parameter (124) in an environment of the data transmitter (130), wherein, when generating the transmit signal (120), the at least one signal parameter of the transmit signal (120) or a parameter of a signal on which the at least one signal parameter of the transmit signal (120) depends is changed, and
transmitting (204) the transmit signal (120),
**characterized in that**, when generating the transmit signal (120), the at least one signal parameter depending on the at least one environmental parameter (124) is additionally provided with an offset in order to deteriorate or corrupt the at least one signal parameter,
wherein the offset is a random or pseudo-random offset.

28. Computer program for performing the method according to claim 27 when the computer program is run on a computer or micro-processor.

## Revendications

1. Émetteur de données (130), comprenant :
un dispositif d'émission (136), conçu pour émettre un signal (120), au moins un paramètre de signal du signal (120) dépendant d'au moins un paramètre environnemental (124) dans un environnement de l'émetteur de données (130), et
un dispositif (140) destiné à détériorer ou à fausser le paramètre de signal, conçu pour détériorer ou fausser au moins un paramètre de signal du signal (120) ou un paramètre dont dépend au moins un paramètre de signal du signal (120),
**caractérisé en ce que** le dispositif (140) destiné à détériorer ou à fausser le paramètre de signal est conçu pour appliquer en outre un décalage à au moins un paramètre de signal, dépendant d'au moins un paramètre environnemental (124), afin de détériorer ou de fausser au moins un paramètre de signal,
le décalage étant un décalage aléatoire ou pseudo-aléatoire.

2. Émetteur de données (130) selon la revendication précédente,
dans lequel au moins un paramètre de signal est au moins deux paramètres de signal,
le dispositif (140) destiné à détériorer ou à fausser le paramètre de signal étant conçu pour appliquer le décalage à chacun des au moins deux paramètres de signal afin de détériorer ou de fausser les au moins deux paramètres de signal.

3. Émetteur de données (130) selon l'une des revendications 1 à 2,
le décalage étant un décalage constant et/ou un décalage variable dans le temps.

4. Émetteur de données (130) selon l'une des revendications 1 à 3,
dans lequel le décalage comprend deux composantes de décalage qui varient différemment au cours du temps.

5. Émetteur de données (130) selon l'une des revendications 1 à 3,
dans lequel le décalage comprend deux composantes de décalage,
une première composante de décalage des deux composantes de décalage étant une composante de décalage constante, et une deuxième composante de décalage des deux composantes de décalage étant une composante de décalage variable dans le temps.

6. Émetteur de données (130) selon l'une des revendications 1 à 3,
dans lequel le décalage comprend deux composantes de décalage,
une première composante de décalage des deux composantes de décalage étant basée sur une fonction variable dans le temps,
et une deuxième composante de décalage des deux composantes de décalage étant basée sur un processus aléatoire ou pseudo-aléatoire.

7. Émetteur de données (130) selon l'une des revendications 1 à 6,
l'émetteur de données (130) étant conçu pour dériver le décalage d'un paramètre intrinsèque d'un système de communication (100) de l'émetteur de données (130) ou d'un message à transmettre avec le signal (120).

8. Émetteur de données (130) selon l'une des revendications 1 à 6,
l'émetteur de données (130) étant conçu pour transmettre, avec le signal (120) ou un autre signal, une information chiffrée concernant le décalage.

9. Émetteur de données (130) selon l'une des revendications 1 à 6, l'émetteur de données (130) étant conçu pour dériver le décalage d'une clé cryptographique ou d'une paire de clés connue de l'émetteur de données (130) et d'un récepteur de données.

10. Émetteur de données (130) selon l'une des revendications précédentes,
l'émetteur de données (130) étant conçu pour appliquer au paramètre de signal un facteur de correction dépendant du paramètre environnemental (124) dans l'environnement de l'émetteur de données (130) afin d'obtenir un paramètre de signal corrigé,
le dispositif (140) destiné à détériorer ou à fausser le paramètre de signal étant conçu pour détériorer ou fausser le paramètre de signal corrigé.

11. Émetteur de données (130) selon l'une des revendications 1 à 10,
le paramètre de signal étant une fréquence porteuse ou une variation de celle-ci, le décalage étant un décalage de fréquence.

12. Émetteur de données (130) selon la revendication 11,
le dispositif (140) destiné à détériorer ou à fausser le paramètre de signal étant conçu pour appliquer à la fréquence porteuse un décalage de fréquence aléatoire.

13. Émetteur de données (130) selon l'une des revendications 11 à 12,
le dispositif (140) destiné à détériorer ou à fausser le paramètre de signal étant conçu pour choisir le décalage de fréquence en fonction d'un décalage maximal possible d'un générateur d'horloge (134) de l'émetteur de données (130) et d'une plage de recherche côté récepteur (150).

14. Émetteur de données (130) selon l'une des revendications 11 à 13,
l'émetteur de données (130) étant conçu pour appliquer à la fréquence porteuse un facteur de correction dépendant du paramètre environnemental (124) dans l'environnement de l'émetteur de données (130) afin de corriger une influence du paramètre environnemental (124) sur la fréquence porteuse,
le dispositif (140) destiné à détériorer ou à fausser le paramètre de signal étant conçu pour choisir le décalage de fréquence en fonction d'une plage de recherche côté récepteur (150) et du facteur de correction.

15. Émetteur de données (130) selon l'une des revendications 11 à 14,
l'émetteur de données (130) étant conçu pour émettre le signal (120) sur la base d'un procédé de saut de fréquence utilisant une pluralité de fréquences porteuses,
le dispositif (140) destiné à détériorer ou à fausser le paramètre de signal étant conçu pour appliquer à au moins deux de la pluralité de fréquences porteuses des décalages de fréquence différents.

16. Émetteur de données (130) selon la revendication 15,
les décalages de fréquence étant inférieurs à une largeur de tolérance d'une détection côté récepteur.

17. Émetteur de données (130) selon la revendication 16,
la largeur de tolérance étant inférieure à ¼ du débit de symboles.

18. Émetteur de données (130) selon l'une des revendications 11 à 17,
au moins l'un des décalages de fréquence se situant entre des points de réglage discrets d'une grille PLL d'un générateur d'horloge (134) de l'émetteur de données (130) ou à des multiples de ceux-ci.

19. Émetteur de données (130) selon l'une des revendications 11 à 18,
le signal (120) comprenant une information chiffrée concernant les différents décalages de fréquence.

20. Émetteur de données (130) selon l'une des revendications 11 à 18,
l'émetteur de données (130) étant conçu pour déterminer les différents décalages de fréquence sur la base d'un paramètre intrinsèque d'un système de communication (100) de l'émetteur de données (130) ou sur la base d'une partie du message à transmettre avec le signal (120).

21. Émetteur de données (130) selon l'une des revendications précédentes,
dans lequel le paramètre environnemental est :
- une température,
- une humidité de l'air,
- une pression atmosphérique,
- un rayonnement électromagnétique,
- une luminosité,
- un mouvement et/ou
- une vibration
ou une modification de celle-ci ou de celui-ci.

22. Émetteur de données (130) selon l'une des revendications précédentes,
l'émetteur de données (130) étant conçu pour ajuster de manière adaptative la variation du paramètre de signal en fonction d'une longueur de télégramme ou d'une longueur de sous-paquet de données ou d'un nombre de bits codés.

23. Émetteur de données (130) selon l'une des revendications précédentes,
l'émetteur de données (130) étant conçu pour appliquer des décalages à deux paramètres de signal du signal (120), les décalages des deux paramètres de signal se compensant mutuellement au moins partiellement.

24. Émetteur de données (130) selon l'une des revendications précédentes,
dans lequel des limites de réception d'un récepteur de données (110), qui reçoit le signal (120), sont connues de l'émetteur de données (130),
l'émetteur de données (130) étant conçu pour détériorer ou fausser le paramètre de signal en tenant compte des limites de réception.

25. Système, comprenant :
un émetteur de données (130) selon l'une des revendications 1 à 24, et
un récepteur de données (110), le récepteur de données (110) étant conçu pour recevoir un signal (120), au moins un paramètre de signal du signal (120) étant modifié.

26. Système selon la revendication 25,
le récepteur de données (110) étant conçu pour recevoir un signal (120) d'un émetteur de données (130), le signal (120) ou une génération du signal (120) dépendant d'un signal d'horloge (132) d'un générateur d'horloge (134) de l'émetteur de données (130),
le récepteur de données (110) étant conçu pour déterminer un paramètre de signal du signal (120), et pour déterminer, sur la base du paramètre de signal, un paramètre environnemental (114) auquel le générateur d'horloge de l'émetteur de données (130) ou le signal (120) est exposé,
l'émetteur de données (110) étant conçu pour compenser une détérioration ou un faussage du paramètre de signal du côté émetteur avant l'estimation du paramètre de signal ou du paramètre environnemental.

27. Procédé (200) comprenant le fait de :
générer (202) un signal d'émission (120), au moins un paramètre de signal du signal d'émission (120) dépendant d'au moins un paramètre environnemental (124) dans un environnement de l'émetteur de données (130), lors de la génération du signal d'émission (120), au moins un paramètre de signal du signal d'émission (120) ou un paramètre d'un signal dont dépend au moins un paramètre de signal du signal d'émission (120) étant modifié, et
émettre (204) le signal d'émission (120),
**caractérisé en ce que**, lors de la génération du signal d'émission (120), au moins un paramètre de signal, qui dépend d'au moins un paramètre environnemental (124), est en outre soumis à un décalage afin de détériorer ou de fausser au moins un paramètre de signal,
le décalage étant un décalage aléatoire ou pseudo-aléatoire.

28. Programme informatique pour mettre en œuvre le procédé selon la revendication 27, lorsque le programme informatique est exécuté sur un ordinateur ou un microprocesseur.
